# EUROPEAN PATENT SPECIFICATION

(11) **EP 2 973 939 B1**
(45) Date of publication and mention of the grant of the patent: **18.03.2020**
(21) Application number: 14708466.9
(22) Date of filing: 25.02.2014
(51) Int. Cl.: H02J 7/02, H04B 5/00, H02J 5/00

(54) **SYSTEMS AND METHODS FOR EXTENDING THE POWER CAPABILITY OF A WIRELESS CHARGER**
SYSTEM UND VERFAHREN ZUM ERWEITERN DER LEISTUNGSFÄHIGKEIT EINES DRAHTLOSEN LADEGERÄTS
SYSTEMES ET PROCEDES POUR ETENDRE LA CAPACITE D'ALIMENTATION D'UN CHARGEUR SANS FIL

(30) Priority: 12.03.2013 US 201313797754
(43) Date of publication of application: 20.01.2016
(73) Proprietor: Qualcomm Incorporated, San Diego, CA 92121-1714 (US)
(72) Inventor: CAROBOLANTE, Francesco, San Diego, California 92121-1714 (US)
(74) Representative: Tomkins & Co
(86) International application number: PCT/US2014/018362
(87) International publication number: WO 2014/163874

(56) References cited:
- EP-A2- 2 495 842
- US-A1- 2011 140 538
- US-A1- 2011 156 640
- EBERHARD WAFFENSCHMIDT: "Wireless power for mobile devices", TELECOMMUNICATIONS ENERGY CONFERENCE (INTELEC), 2011 IEEE 33RD INTERNATIONAL, IEEE, 9 October 2011 (2011-10-09), pages 1-9, XP032071351, DOI: 10.1109/INTLEC.2011.6099840 ISBN: 978-1-4577-1249-4

## Description

### FIELD

The present invention relates generally to wireless power. More specifically, the disclosure is directed to transmitters and receivers in a wireless power transfer system.

### BACKGROUND

An increasing number and variety of electronic devices are powered via rechargeable batteries. Such devices include mobile phones, portable music players, laptop computers, tablet computers, computer peripheral devices, communication devices (e.g., Bluetooth devices), digital cameras, hearing aids, and the like. While battery technology has improved, battery-powered electronic devices increasingly require and consume greater amounts of power, thereby often requiring recharging. Rechargeable devices are often charged via wired connections through cables or other similar connectors that are physically connected to a power supply. Cables and similar connectors may sometimes be inconvenient or cumbersome and have other drawbacks. Wireless charging systems that are capable of transferring power in free space to be used to charge rechargeable electronic devices or provide power to electronic devices may overcome some of the deficiencies of wired charging solutions. As such, wireless power transfer systems and methods that efficiently and safely transfer power to electronic devices are desirable, see for example US2011/0156640.

### SUMMARY

Various implementations of systems, methods and devices within the scope of the appended claims each have several aspects, no single one of which is solely responsible for the desirable attributes described herein. Without limiting the scope of the appended claims, some prominent features are described herein.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

One aspect of the disclosure provides an apparatus for transferring energy wirelessly to at least one receive antenna of at least one receiver according to claim 1. The apparatus comprises a first transmit antenna configured to generate a first wireless field when the at least one receiver is in an energy transfer region of the first transmit antenna. The apparatus further comprises a second transmit antenna spatially separated from the first transmit antenna, the second transmit antenna configured to generate a second wireless field when the at least one receiver is in an energy transfer region of the second transmit antenna. The apparatus further comprises a controller operationally coupled to the first transmit antenna and the second transmit antenna and configured to activate at least one of the first transmit antenna or the second transmit antenna based on whether the at least one receiver is in an energy transfer region of one or both of the first wireless field and the second wireless field. The controller may be further configured to control, when both the first transmit antenna and the second transmit antenna are activated, whether the first transmit antenna and the second transmit antenna independently transfer energy wirelessly to a same receiver via the first and second wireless fields, whether the first transmit antenna and the second transmit antenna jointly transfer energy wirelessly to the same receiver via the first and second wireless fields, or whether the first transmit antenna and the second transmit antenna transfer energy wirelessly to different receivers via the first and second wirelessly fields.

Another aspect of the disclosure provides a method of transferring energy wirelessly to at least one receive antenna of at least one receiver according to claim 6. The method comprises generating, by a first transmit antenna, a first wireless field when the at least one receiver is in an energy transfer region of the first transmit antenna. The method further comprises generating, by a second transmit antenna spatially separated from the first transmit antenna, a second wireless field when the at least one receiver is in an energy transfer region of the second transmit antenna. The method further comprises activating at least one of the first transmit antenna or the second transmit antenna based on whether the at least one receiver is in an energy transfer region of one or both of the first wireless field and the second wireless field. The method further comprises controlling, when both the first transmit antenna and the second transmit antenna are activated, whether the first transmit antenna and the second transmit antenna independently transfer energy wirelessly to a same receiver via the first and second wireless fields, whether the first transmit antenna and the second transmit antenna jointly transfer energy wirelessly to the same receiver via the first and second wireless fields, or whether the first transmit antenna and the second transmit antenna transfer energy wirelessly to different receivers via the first and second wirelessly fields.

Another aspect of the disclosure provides an apparatus for transferring energy wirelessly to at least one receive antenna of at least one receiver. The apparatus comprises means for generating a first wireless field when the at least one receiver is in an energy transfer region of the means for generating the first wireless field. The apparatus further comprises means for generating a second wireless field when the at least one receiver is in an energy transfer region of the means for generating the second wireless field. The apparatus further comprises means for activating at least one of the means for generating the first wireless field or the means for generating the second wireless field based on whether the at least one receiver is in an energy transfer region of one or both of the first wireless field and the second wireless field. The apparatus further comprises means for controlling, when both the means for generating the first wireless field and the means for generating the second wireless field are activated, whether the means for generating the first wireless field and the means for generating the second wireless field independently transfer energy wirelessly to a same receiver via the first and second wireless fields, whether the means for generating the first wireless field and the means for generating the second wireless field jointly transfer energy wirelessly to the same receiver via the first and second wireless fields, or whether the means for generating the first wireless field and the means for generating the second wireless field transfer energy wirelessly to different receivers via the first and second wirelessly fields.

Another aspect of the disclosure provides a non-transitory computer-readable medium according to claim 11 comprising code that, when executed, causes an apparatus to generate, using a first transmit antenna, a first wireless field when at least one receiver is in an energy transfer region of the first transmit antenna. The medium further comprises code that, when executed, causes an apparatus to generate, using a second transmit antenna spatially separated from the first transmit antenna, a second wireless field when the at least one receiver is in an energy transfer region of the second transmit antenna. The medium further comprises code that, when executed, causes an apparatus to activate at least one of the first transmit antenna or the second transmit antenna based on whether the at least one receiver is in an energy transfer region of one or both of the first wireless field and the second wireless field. The medium further comprises code that, when executed, causes an apparatus to control, when both the first transmit antenna and the second transmit antenna are activated, whether the first transmit antenna and the second transmit antenna independently transfer energy wirelessly to a same receiver via the first and second wireless fields, whether the first transmit antenna and the second transmit antenna jointly transfer energy wirelessly to the same receiver via the first and second wireless fields, or whether the first transmit antenna and the second transmit antenna transfer energy wirelessly to different receivers via the first and second wirelessly fields.

### BRIEF DESCRIPTION OF THE DRAWINGS

FIG. 1 is a functional block diagram of an exemplary wireless power transfer system, in accordance with exemplary embodiments of the invention.
FIG. 2 is a functional block diagram of exemplary components that may be used in the wireless power transfer system of FIG. 1, in accordance with various exemplary embodiments of the invention.
FIG. 3 is a schematic diagram of a portion of transmit circuitry or receive circuitry of FIG. 2 including a transmit or receive antenna, in accordance with exemplary embodiments of the invention.
FIG. 4 is a functional block diagram of a transmitter that may be used in the wireless power transfer system of FIG. 1, in accordance with exemplary embodiments of the invention.
FIG. 5 is a functional block diagram of a receiver that may be used in the wireless power transfer system of FIG. 1, in accordance with exemplary embodiments of the invention.
FIG. 6 is a schematic diagram of a portion of transmit circuitry that may be used in the transmit circuitry of FIG. 4.
FIG. 7 is a diagram illustrating the layout of a first transmit coil and a second transmit coil in the wireless power transfer system of FIG. 1.
FIG. 8A is a diagram illustrating a top view of two transmit coils transferring energy wirelessly to a dual-loop receive coil for charging purposes.
FIG. 8B is a diagram illustrating a side view of two transmit coils transferring energy wirelessly to a dual-loop receive coil for charging purposes.
FIG. 9 is a diagram illustrating a top view and a side view of a first transmit coil, a second transmit coil, and a third transmit coil in the wireless power transfer system of FIG. 1.
FIG. 10 is a diagram illustrating a top view and a side view of a first transmit coil, a second transmit coil, a third transmit coil, and a fourth transmit coil in the wireless power transfer system of FIG. 1.
FIG. 11 is a flowchart of an exemplary method 800 for transferring energy wirelessly.
FIG. 12 is a functional block diagram of a transmitter, in accordance with an exemplary embodiment.

The various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DETAILED DESCRIPTION

The detailed description set forth below in connection with the appended drawings is intended as a description of exemplary embodiments of the invention and is not intended to represent the only embodiments in which the invention may be practiced. The term "exemplary" used throughout this description means "serving as an example, instance, or illustration," and should not necessarily be construed as preferred or advantageous over other exemplary embodiments. The detailed description includes specific details for the purpose of providing a thorough understanding of the exemplary embodiments of the invention. In some instances, some devices are shown in block diagram form.

Wirelessly transferring power may refer to transferring any form of energy associated with electric fields, magnetic fields, electromagnetic fields, or otherwise from a transmitter to a receiver without the use of physical electrical conductors (e.g., power may be transferred through free space). The power output into a wireless field (e.g., a magnetic field or an electromagnetic field) may be received, captured by, or coupled by a "receiving antenna" to achieve power transfer. It will be understood that, throughout this specification, two components being "coupled" may refer to their interaction through direct or indirect ways, and may further refer to a physically connected (e.g. wired) coupling or a physically disconnected (e.g. wireless) coupling.

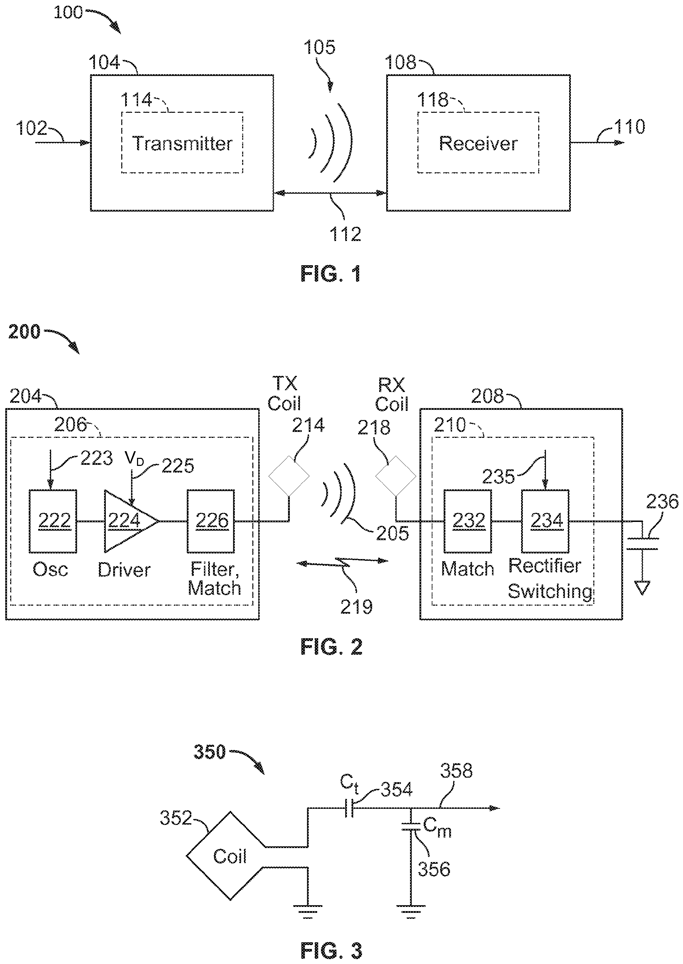

FIG. 1 is a functional block diagram of an exemplary wireless power transfer system 100, in accordance with exemplary embodiments of the invention. Input power 102 may be provided to a transmitter 104 from a power source (not shown) for generating a field 105 for providing energy transfer. A receiver 108 may couple to the field 105 and generate output power 110 for storing or consumption by a device (not shown) coupled to the output power 110. Both the transmitter 104 and the receiver 108 are separated by a distance 112. In one exemplary embodiment, transmitter 104 and receiver 108 are configured according to a mutual resonant relationship. When the resonant frequency of receiver 108 and the resonant frequency of transmitter 104 are substantially the same or very close, transmission losses between the transmitter 104 and the receiver 108 are minimal. As such, wireless power transfer may be provided over larger distance in contrast to purely inductive solutions that may require large coils to be very close (e.g., mms). Resonant inductive coupling techniques may thus allow for improved efficiency and power transfer over various distances and with a variety of inductive coil configurations.

The receiver 108 may receive power when the receiver 108 is located in an energy field 105 produced by the transmitter 104. The field 105 corresponds to a region where energy output by the transmitter 104 may be captured by a receiver 105. In some cases, the field 105 may correspond to the "near-field" of the transmitter 104 as will be further described below. The transmitter 104 may include a transmit antenna 114 (e.g., a transmit coil) for outputting an energy transmission. The receiver 108 further includes a receive antenna 118 (e.g., a receive coil) for receiving or capturing energy from the energy transmission. The near-field may correspond to a region in which there are strong reactive fields resulting from the currents and charges in the transmit antenna 114 that minimally radiate power away from the transmit antenna 114. In some cases the near-field may correspond to a region that is within about one wavelength (or a fraction thereof) of the transmit antenna 114. The transmit and receive antennas 114 and 118 are sized according to applications and devices to be associated therewith. As described above, efficient energy transfer may occur by coupling a large portion of the energy in a field 105 of the transmit antenna 114 to a receive antenna 118 rather than propagating most of the energy in an electromagnetic wave to the far field. When positioned within the field 105, a "coupling mode" may be developed between the transmit antenna 114 and the receive antenna 118. The area around the transmit and receive antennas 114 and 118 where this coupling may occur is referred to herein as a coupling-mode region.

FIG. 2 is a functional block diagram of exemplary components that may be used in the wireless power transfer system 100 of FIG. 1, in accordance with various exemplary embodiments of the invention. The transmitter 204 may include transmit circuitry 206 that may include an oscillator 222, a driver circuit 224, and a filter and matching circuit 226. The oscillator 222 may be configured to generate a signal at a desired frequency, such as 468.75 KHz, 6.78 MHz or 13.56 MHz, that may be adjusted in response to a frequency control signal 223. The oscillator signal may be provided to a driver circuit 224 configured to drive the transmit antenna 214 at, for example, a resonant frequency of the transmit antenna 214. The driver circuit 224 may be a switching amplifier configured to receive a square wave from the oscillator 222 and output a sine wave. For example, the driver circuit 224 may be a class E amplifier. A filter and matching circuit 226 may be also included to filter out harmonics or other unwanted frequencies and match the impedance of the transmitter 204 to the transmit antenna 214. As a result of driving the transmit antenna 214, the transmitter 204 may wirelessly output power at a level sufficient for charging or powering an electronic device. As one example, the power provided may be for example on the order of 300 milliWatts to 5 Watts to power or charge different devices with different power requirements. Higher or lower power levels may also be provided.

The receiver 208 may include receive circuitry 210 that may include a matching circuit 232 and a rectifier and switching circuit 234 to generate a DC power output from an AC power input to charge a battery 236 as shown in FIG. 2 or to power a device (not shown) coupled to the receiver 108. The matching circuit 232 may be included to match the impedance of the receive circuitry 210 to the receive antenna 218. The receiver 208 and transmitter 204 may additionally communicate on a separate communication channel 219 (e.g., Bluetooth, zigbee, cellular, etc). The receiver 208 and transmitter 204 may alternatively communicate via in-band signaling using characteristics of the wireless field 206.

As described more fully below, receiver 208, that may initially have a selectively disablable associated load (e.g., battery 236), may be configured to determine whether an amount of power transmitted by transmitter 204 and received by receiver 208 is appropriate for charging a battery 236. Further, receiver 208 may be configured to enable a load (e.g., battery 236) upon determining that the amount of power is appropriate. In some embodiments, a receiver 208 may be configured to directly utilize power received from a wireless power transfer field without charging of a battery 236. For example, a communication device, such as a near-field communication (NFC) or radio-frequency identification device (RFID may be configured to receive power from a wireless power transfer field and communicate by interacting with the wireless power transfer field and/or utilize the received power to communicate with a transmitter 204 or other devices.

FIG. 3 is a schematic diagram of a portion of transmit circuitry 206 or receive circuitry 210 of FIG. 2 including a transmit or receive antenna 352, in accordance with exemplary embodiments of the invention. As illustrated in FIG. 3, transmit or receive circuitry 350 used in exemplary embodiments including those described below may include an antenna 352. The antenna 352 may also be referred to or be configured as a "loop" antenna 352. The antenna 352 may also be referred to herein or be configured as a "magnetic" antenna or an induction coil. The term "antenna" generally refers to a component that may wirelessly output or receive energy for coupling to another "antenna." The antenna may also be referred to as a coil of a type that is configured to wirelessly output or receive power. As used herein, an antenna 352 is an example of a "power transfer component" of a type that is configured to wirelessly output and/or receive power. The antenna 352 may be configured to include an air core or a physical core such as a ferrite core (not shown). An air core loop antenna 352 allows the placement of other components within the core area. In addition, an air core loop may more readily enable placement of the receive antenna 218 (FIG. 2) within a plane of the transmit antenna 214 (FIG. 2) where the coupled-mode region of the transmit antenna 214 (FIG. 2) may be more powerful.

As stated, efficient transfer of energy between the transmitter 104 and receiver 108 may occur during matched or nearly matched resonance between the transmitter 104 and the receiver 108. However, even when resonance between the transmitter 104 and receiver 108 are not matched, energy may be transferred, although the efficiency may be affected. Transfer of energy occurs by coupling energy from the field 105 of the transmit antenna 214 coil to the receive antenna 218 residing in the neighborhood where this field 105 is established rather than propagating the energy from the transmit antenna 214 into free space.

The resonant frequency of the loop or magnetic antennas is based on the inductance and capacitance. Inductance may be simply the inductance created by the antenna 352, whereas, capacitance may be added to the antenna's inductance to create a resonant structure at a desired resonant frequency. As a non-limiting example, capacitor 352 and capacitor 354 may be added to the transmit or receive circuitry 350 to create a resonant circuit that selects a signal 356 at a resonant frequency. Accordingly, for larger diameter antennas, the size of capacitance needed to sustain resonance may decrease as the diameter or inductance of the loop increases. Furthermore, as the diameter of the antenna increases, the efficient energy transfer area of the near-field may increase. Other resonant circuits formed using other components are also possible. As another non-limiting example, a capacitor may be placed in parallel between the two terminals of the antenna 350. For transmit antennas, a signal 358 with a frequency that substantially corresponds to the resonant frequency of the antenna 352 may be an input to the antenna 352.

In one embodiment, the transmitter 104 may be configured to output a time varying magnetic field with a frequency corresponding to the resonant frequency of the transmit antenna 114. When the receiver is within the field 105, the time varying magnetic field may induce a current in the receive antenna 118. As described above, if the receive antenna 118 is configured to be resonant at the frequency of the transmit antenna 118, energy may be efficiently transferred. The AC signal induced in the receive antenna 118 may be rectified as described above to produce a DC signal that may be provided to charge or to power a load.

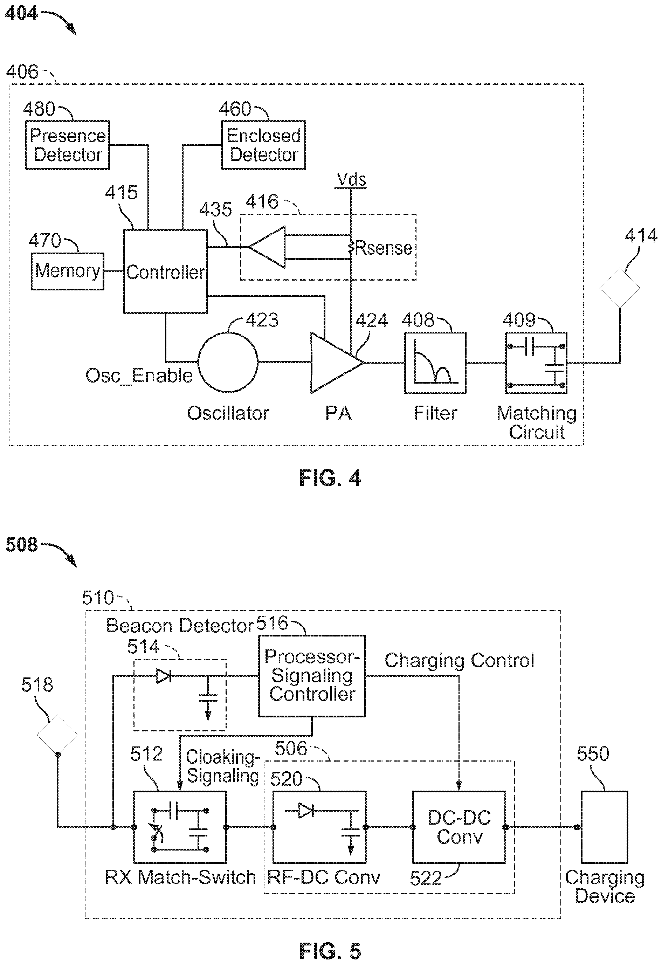

FIG. 4 is a functional block diagram of a transmitter 404 that may be used in the wireless power transfer system of FIG. 1, in accordance with exemplary embodiments of the invention. The transmitter 404 may include transmit circuitry 406 and a transmit antenna 414. The transmit antenna 414 may be the antenna 352 as shown in FIG. 3. Transmit circuitry 406 may provide RF power to the transmit antenna 414 by providing an oscillating signal resulting in generation of energy (e.g., magnetic flux) about the transmit antenna 414. Transmitter 404 may operate at any suitable frequency. By way of example, transmitter 404 may operate at the 6.78 MHz ISM band.

Transmit circuitry 406 may include a fixed impedance matching circuit 409 for matching the impedance of the transmit circuitry 406 (e.g., 50 ohms) to the transmit antenna 414 and a low pass filter (LPF) 408 configured to reduce harmonic emissions to levels to prevent self-jamming of devices coupled to receivers 108 (FIG. 1). Other exemplary embodiments may include different filter topologies, including but not limited to, notch filters that attenuate specific frequencies while passing others and may include an adaptive impedance match, that may be varied based on measurable transmit metrics, such as output power to the antenna 414 or DC current drawn by the driver circuit 424. Transmit circuitry 406 further includes a driver circuit 424 configured to drive an RF signal as determined by an oscillator 423. The transmit circuitry 406 may be comprised of discrete devices or circuits, or alternately, may be comprised of an integrated assembly. An exemplary RF power output from transmit antenna 414 may be on the order of 2.5 Watts.

Transmit circuitry 406 may further include a controller 415 for selectively enabling the oscillator 423 during transmit phases (or duty cycles) for specific receivers, for adjusting the frequency or phase of the oscillator 423, and for adjusting the output power level for implementing a communication protocol for interacting with neighboring devices through their attached receivers. It is noted that the controller 415 may also be referred to herein as processor 415. Adjustment of oscillator phase and related circuitry in the transmission path may allow for reduction of out of band emissions, especially when transitioning from one frequency to another.

The transmit circuitry 406 may further include a load sensing circuit 416 for detecting the presence or absence of active receivers in the vicinity of the near-field generated by transmit antenna 414. By way of example, a load sensing circuit 416 monitors the current flowing to the driver circuit 424, that may be affected by the presence or absence of active receivers in the vicinity of the field generated by transmit antenna 414 as will be further described below. Detection of changes to the loading on the driver circuit 424 are monitored by controller 415 for use in determining whether to enable the oscillator 423 for transmitting energy and to communicate with an active receiver. As described more fully below, a current measured at the driver circuit 424 may be used to determine whether an invalid device is positioned within a wireless power transfer region of the transmitter 404.

The transmit antenna 414 may be implemented with a Litz wire or as an antenna strip with the thickness, width and metal type selected to keep resistive losses low. In a one implementation, the transmit antenna 414 may generally be configured for association with a larger structure such as a table, mat, lamp or other less portable configuration. Accordingly, the transmit antenna 414 generally may not need "turns" in order to be of a practical dimension. An exemplary implementation of a transmit antenna 414 may be "electrically small" (i.e., fraction of the wavelength) and tuned to resonate at lower usable frequencies by using capacitors to define the resonant frequency.

The transmitter 404 may gather and track information about the whereabouts and status of receiver devices that may be associated with the transmitter 404. Thus, the transmit circuitry 406 may include a presence detector 480, an enclosed detector 460, or a combination thereof, connected to the controller 415 (also referred to as a processor herein). The controller 415 may adjust an amount of power delivered by the driver circuit 424 in response to presence signals from the presence detector 480 and the enclosed detector 460. The transmitter 404 may receive power through a number of power sources, such as, for example, an AC-DC converter (not shown) to convert conventional AC power present in a building, a DC-DC converter (not shown) to convert a conventional DC power source to a voltage suitable for the transmitter 404, or directly from a conventional DC power source (not shown).

As a non-limiting example, the presence detector 480 may be a motion detector utilized to sense the initial presence of a device to be charged that is inserted into the coverage area of the transmitter 404. After detection, the transmitter 404 may be turned on and the RF power received by the device may be used to toggle a switch on the Rx device in a pre-determined manner, which in turn results in changes to the driving point impedance of the transmitter 404.

As another non-limiting example, the presence detector 480 may be a detector capable of detecting a human, for example, by infrared detection, motion detection, or other suitable means. In some exemplary embodiments, there may be regulations limiting the amount of power that a transmit antenna 414 may transmit at a specific frequency. In some cases, these regulations are meant to protect humans from electromagnetic radiation. However, there may be environments where a transmit antenna 414 is placed in areas not occupied by humans, or occupied infrequently by humans, such as, for example, garages, factory floors, shops, and the like. If these environments are free from humans, it may be permissible to increase the power output of the transmit antenna 414 above the normal power restrictions regulations. In other words, the controller 415 may adjust the power output of the transmit antenna 414 to a regulatory level or lower in response to human presence and adjust the power output of the transmit antenna 414 to a level above the regulatory level when a human is outside a regulatory distance from the electromagnetic field of the transmit antenna 414.

As a non-limiting example, the enclosed detector 460 (may also be referred to herein as an enclosed compartment detector or an enclosed space detector) may be a device such as a sense switch for determining when an enclosure is in a closed or open state. When a transmitter is in an enclosure that is in an enclosed state, a power level of the transmitter may be increased.

In exemplary embodiments, a method by which the transmitter 404 does not remain on indefinitely may be used. In this case, the transmitter 404 may be programmed to shut off after a user-determined amount of time. This feature prevents the transmitter 404, notably the driver circuit 424, from running long after the wireless devices in its perimeter are fully charged. This event may be due to the failure of the circuit to detect the signal sent from either the repeater or the receive antenna 218 that a device is fully charged. To prevent the transmitter 404 from automatically shutting down if another device is placed in its perimeter, the transmitter 404 automatic shut off feature may be activated only after a set period of lack of motion detected in its perimeter. The user may be able to determine the inactivity time interval, and change it as desired. As a non-limiting example, the time interval may be longer than that needed to fully charge a specific type of wireless device under the assumption of the device being initially fully discharged.

FIG. 5 is a functional block diagram of a receiver 508 that may be used in the wireless power transfer system of FIG. 1, in accordance with exemplary embodiments of the invention. The receiver 508 includes receive circuitry 510 that may include a receive antenna 518. Receiver 508 further couples to device 550 for providing received power thereto. It should be noted that receiver 508 is illustrated as being external to device 550 but may be integrated into device 550. Energy may be propagated wirelessly to receive antenna 518 and then coupled through the rest of the receive circuitry 510 to device 550. By way of example, the charging device may include devices such as mobile phones, portable music players, laptop computers, tablet computers, computer peripheral devices, communication devices (e.g., Bluetooth devices), digital cameras, hearing aids (an other medical devices), and the like.

Receive antenna 518 may be tuned to resonate at the same frequency, or within a specified range of frequencies, as transmit antenna 414 (FIG. 4). Receive antenna 518 may be similarly dimensioned with transmit antenna 414 or may be differently sized based upon the dimensions of the associated device 550. By way of example, device 550 may be a portable electronic device having diametric or length dimension smaller than the diameter or length of transmit antenna 414. In such an example, receive antenna 518 may be implemented as a multi-turn coil in order to reduce the capacitance value of a tuning capacitor (not shown) and increase the receive coil's impedance. By way of example, receive antenna 518 may be placed around the substantial circumference of device 550 in order to maximize the antenna diameter and reduce the number of loop turns (i.e., windings) of the receive antenna 518 and the inter-winding capacitance.

Receive circuitry 510 may provide an impedance match to the receive antenna 518. Receive circuitry 510 includes power conversion circuitry 506 for converting a received RF energy source into charging power for use by the device 550. Power conversion circuitry 506 includes an RF-to-DC converter 520 and may also include a DC-to-DC converter 522. RF-to-DC converter 520 rectifies the RF energy signal received at receive antenna 518 into a non-alternating power with an output voltage represented by V_{rect}. The DC-to-DC converter 522 (or other power regulator) converts the rectified RF energy signal into an energy potential (e.g., voltage) that is compatible with device 550 with an output voltage and output current represented by Vₒᵤₜ and Iₒᵤₜ. Various RF-to-DC converters are contemplated, including partial and full rectifiers, regulators, bridges, doublers, as well as linear and switching converters.

Receive circuitry 510 may further include switching circuitry 512 for connecting receive antenna 518 to the power conversion circuitry 506 or alternatively for disconnecting the power conversion circuitry 506. Disconnecting receive antenna 518 from power conversion circuitry 506 not only suspends charging of device 550, but also changes the "load" as "seen" by the transmitter 404 (FIG. 2).

As disclosed above, transmitter 404 includes load sensing circuit 416 that may detect fluctuations in the bias current provided to transmitter driver circuit 424. Accordingly, transmitter 404 has a mechanism for determining when receivers are present in the transmitter's near-field.

When multiple receivers 508 are present in a transmitter's near-field, it may be desirable to time-multiplex the loading and unloading of one or more receivers to enable other receivers to more efficiently couple to the transmitter. A receiver 508 may also be cloaked in order to eliminate coupling to other nearby receivers or to reduce loading on nearby transmitters. This "unloading" of a receiver is also known herein as a "cloaking." Furthermore, this switching between unloading and loading controlled by receiver 508 and detected by transmitter 404 may provide a communication mechanism from receiver 508 to transmitter 404 as is explained more fully below. Additionally, a protocol may be associated with the switching that enables the sending of a message from receiver 508 to transmitter 404. By way of example, a switching speed may be on the order of 100 µsec.

In an exemplary embodiment, communication between the transmitter 404 and the receiver 508 refers to a device sensing and charging control mechanism, rather than conventional two-way communication (i.e., in band signaling using the coupling field). In other words, the transmitter 404 may use on/off keying of the transmitted signal to adjust whether energy is available in the near-field. The receiver may interpret these changes in energy as a message from the transmitter 404. From the receiver side, the receiver 508 may use tuning and de-tuning of the receive antenna 518 to adjust how much power is being accepted from the field. In some cases, the tuning and de-tuning may be accomplished via the switching circuitry 512. The transmitter 404 may detect this difference in power used from the field and interpret these changes as a message from the receiver 508. It is noted that other forms of modulation of the transmit power and the load behavior may be utilized.

Receive circuitry 510 may further include signaling detector and beacon circuitry 514 used to identify received energy fluctuations that may correspond to informational signaling from the transmitter to the receiver. Furthermore, signaling and beacon circuitry 514 may also be used to detect the transmission of a reduced RF signal energy (i.e., a beacon signal) and to rectify the reduced RF signal energy into a nominal power for awakening either un-powered or power-depleted circuits within receive circuitry 510 in order to configure receive circuitry 510 for wireless charging.

Receive circuitry 510 further includes processor 516 for coordinating the processes of receiver 508 described herein including the control of switching circuitry 512 described herein. Cloaking of receiver 508 may also occur upon the occurrence of other events including detection of an external wired charging source (e.g., wall/USB power) providing charging power to device 550. Processor 516, in addition to controlling the cloaking of the receiver, may also monitor beacon circuitry 514 to determine a beacon state and extract messages sent from the transmitter 404. Processor 516 may also adjust the DC-to-DC converter 522 for improved performance.

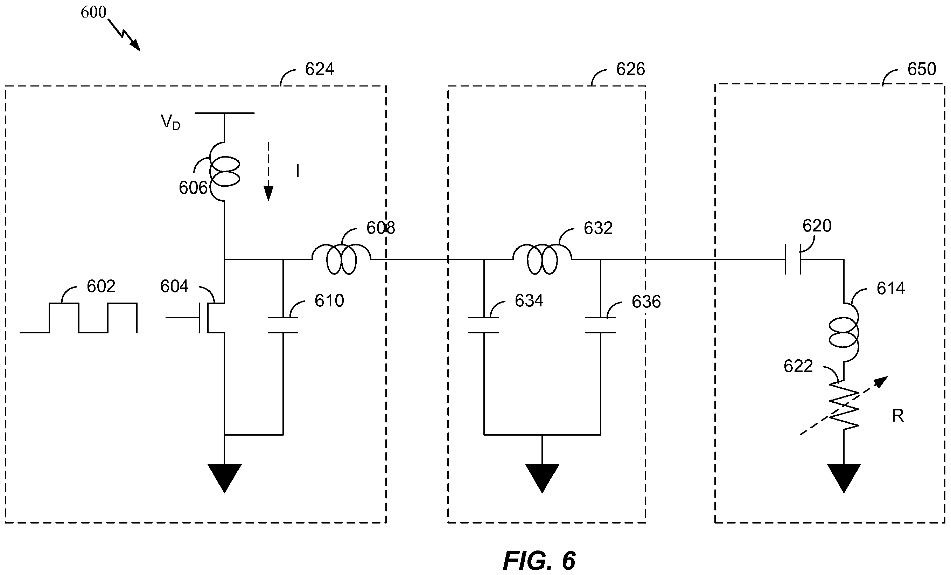

FIG. 6 is a schematic diagram of a portion of transmit circuitry 600 that may be used in the transmit circuitry 406 of FIG. 4. The transmit circuitry 600 may include a driver circuit 624 as described above in FIG. 4. As described above, the driver circuit 624 may be a switching amplifier that may be configured to receive a square wave and output a sine wave to be provided to the transmit circuit 650. In some cases the driver circuit 624 may be referred to as an amplifier circuit. The driver circuit 624 is shown as a class E amplifier, however, any suitable driver circuit 624 may be used in accordance with embodiments of the invention. The driver circuit 624 may be driven by an input signal 602 from an oscillator 423 as shown in FIG. 4. The driver circuit 624 may also be provided with a drive voltage V_{D} that is configured to control the maximum power that may be delivered through a transmit circuit 650. To eliminate or reduce harmonics, the transmit circuitry 600 may include a filter circuit 626. The filter circuit 626 may be a three pole (capacitor 634, inductor 632, and capacitor 636) low pass filter circuit 626.

The signal output by the filter circuit 626 may be provided to a transmit circuit 650 comprising an antenna 614. The transmit circuit 650 may include a series resonant circuit having a capacitance 620 and inductance (e.g., that may be due to the inductance or capacitance of the antenna or to an additional capacitor component) that may resonate at a frequency of the filtered signal provided by the driver circuit 624. The load of the transmit circuit 650 may be represented by the variable resistor 622. The load may be a function of a wireless power receiver 508 that is positioned to receive power from the transmit circuit 650.

Generally in wireless charging systems, it may be difficult to increase a size of a transmit coil, such as the transmit antennas 114, 214, and/or 414, in order to accommodate a large device because this may extend a coverage area of a wireless field such that safety becomes an issue. For example, if the transmit coil is larger than the receive coil (e.g., receive antenna 118, 218, and/or 518), there is a potential safety hazard for a human being due to the person's body overlapping the wireless field generated by the transmit coil. In addition, it may be difficult to increase the power supplied to the transmit coil because of similar safety concerns.

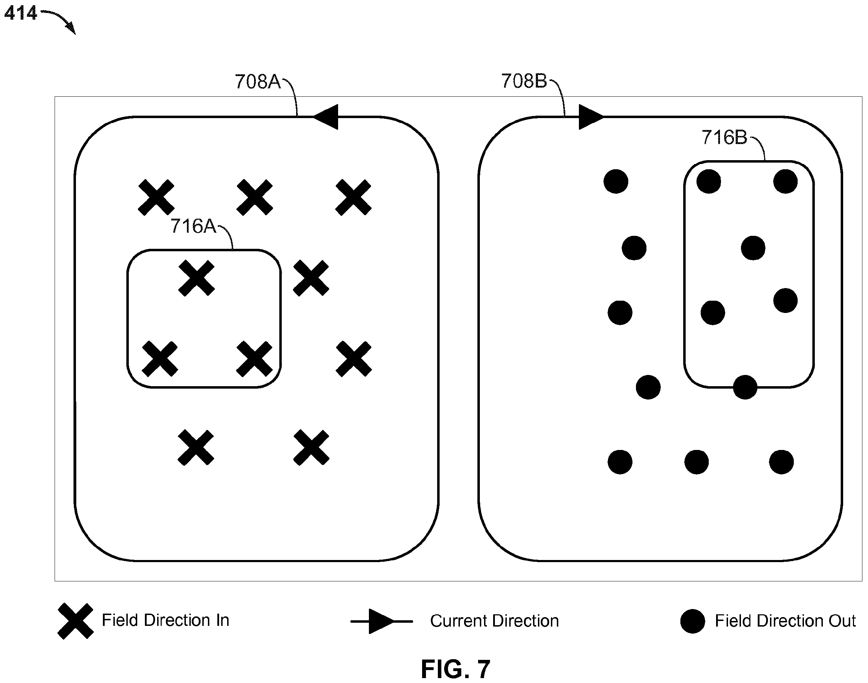

The safety concerns identified above may be minimized by increasing the number of transmit coils (e.g., by increasing the number of transmit antennas 114, 214, and/or 414). By increasing the number of transmit coils, the power range capability of a transmitter may be increased from 5-15W to a significantly larger load (e.g., 30W or more) while still satisfying regulatory requirements and maintaining backward compatibility to lower power functionality. In an embodiment, a transmitter, such as the transmitter 404, includes two or more transmit coils that each generate a wireless field. A transmitter that includes two or more transmit coils is described in greater detail below with respect to FIGS. 7-12.

FIG. 7 is a diagram illustrating the layout of a first transmit coil 708A and a second transmit coil 708B in a wireless power transfer system, such as the wireless power transfer system 100 of FIG. 1. As illustrated in FIG. 7, the transmit antenna 414 of FIG. 4 may include the first transmit coil 708A and the second transmit coil 708B. In addition, a first receive coil 716A and a second receive coil 716B may be located in close proximity to the first transmit coil 708A and the second transmit coil 708B. In an embodiment, the first receive coil 716A corresponds with a first receive antenna 518 (e.g., a first receiver 508) and the second receive coil 716B corresponds with a second receive antenna 518 (e.g., a second receiver 508). It should be apparent to one skilled in the art that the wireless power transfer system described herein may apply to any application involving the wireless transfer of energy (e.g., charging mobile devices, electric vehicles, etc.).

In an embodiment, the first transmit coil 708A and the second transmit coil 708B may each be excited at or near their resonant frequency by the transmit circuitry 406. The first transmit coil 708A may generate a first wireless field and the second transmit coil 708B may generate a second wireless field. The direction of flux through each of the first transmit coil 708A and the second transmit coil 708B is illustrated in FIG. 7. For example, a direction of the wireless field may flow in through the first transmit coil 708A (e.g., the direction of flux is into the page) and a direction of the wireless field may flow out through the second transmit coil 708B (e.g., the direction of flux is out of the page toward the reader). The direction of current in the first transmit coil 708A may be counterclockwise and the direction of current in the second transmit coil 708B may be clockwise.

As illustrated in FIG. 7, the first receive coil 716A may overlap the first wireless field generated by the first transmit coil 708A. Likewise, the second receive coil 716B may overlap the second wireless field generated by the second transmit coil 708B.

In an embodiment, the controller 415 may be coupled to the first transmit coil 708A and the second transmit coil 708B (e.g., directly, not shown, or indirectly). The controller 415 may be configured to control or adjust the first transmit coil 708A and/or the second transmit coil 708B such that either or both transmit coils 708A and 708B wirelessly transfer energy to the first receive coil 716A, the second receive coil 716B, and/or other receive coils via the first wireless field and/or the second wireless field. For example, the controller 415 may control the amount of AC or DC power used to excite the first transmit coil 708A and/or the second transmit coil 708B. In other embodiments, not shown, another controller may be coupled to the first transmit coil 708A and/or the second transmit coil 708B to control or adjust the transmit coils 708A and/or 708B.

In an embodiment, as illustrated in FIG. 7, the first transmit coil 708A and the second transmit coil 708B are organized in a side-by-side configuration (e.g., spatially separated). In other embodiments, not shown, a third transmit coil overlaps or is located next to the first transmit coil 708A and the second transmit coil 708B.

In an embodiment, the first transmit coil 708A and the second transmit coil 708B are similar or substantially identical to each other. For example, the first transmit coil 708A and the second transmit coil 708B may be composed of similar or the same materials and may have similar or the same characteristics.

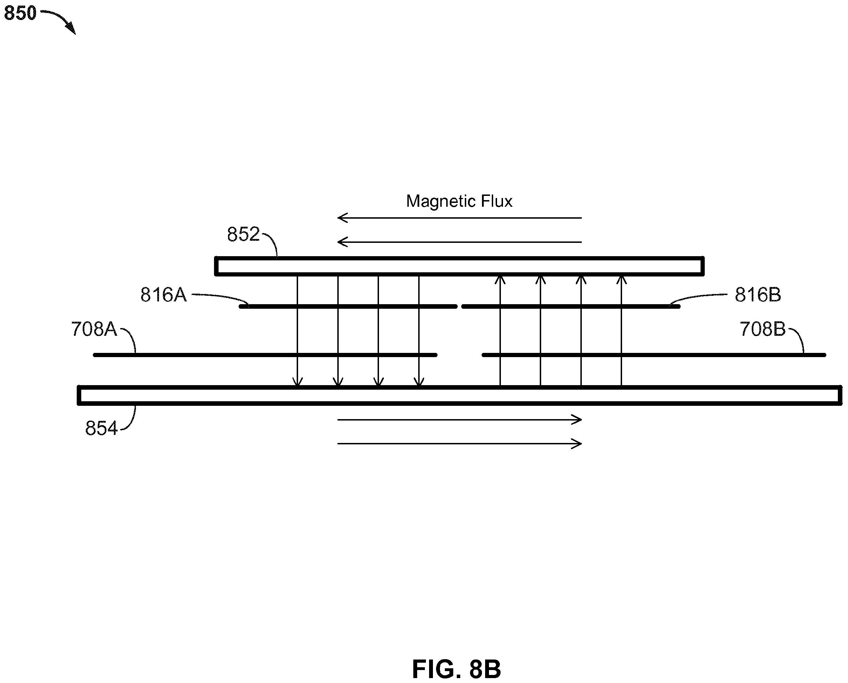

In an embodiment, a magnetic shield (e.g., magnetic shield 854 described below with respect to FIG. 8B) may be placed under or on the bottom of the first transmit coil 708A and/or the second transmit coil 708B. In addition, a magnetic shield (e.g., magnetic shield 852 described below with respect to FIG. 8B) may be placed over or on top of the receive coils 716A and/or 716B and/or other receive coils. The magnetic shields may be configured to prevent or reduce the leaking of energy that is transferred wirelessly. As an example, the magnetic shields may be formed using a ferrite material.

In order to accommodate the requirement of different situations, the transmitter 404 may include at least two operation modes for transferring energy wirelessly to the receiver 508. In an embodiment, in the first operation mode, the first transmit coil 708A and the second transmit coil 708B (and any other transmit coils present in the transmitter 404) are activated and configured to individually transfer at least a portion of the energy wirelessly to a receiver (e.g., the first receive coil 716A and/or the second receive coil 716B). For example, the first transmit coil 708A may transmit a first amount of energy wirelessly to the receiver. The second transmit coil 708B, independently of the first transmit coil 708A, may transmit a second amount of energy wirelessly to the receiver. The first transmit coil 708A and the second transmit coil 708B may transmit the energy concurrently or non-concurrently.

The first transmit coil 708A and/or the second transmit coil 708B may be activated based on the presence of a chargeable device (e.g., the first receive coil 716A and/or the second receive coil 716B) in the energy transfer region (e.g., charging region) of the first transmit coil 708A and/or the second transmit coil 708B. As used herein, an energy transfer region (e.g., charging region) may be the area in which a wireless field is generated by a coil or antenna.

In a first embodiment of the first operation mode, the first transmit coil 708A and the second transmit coil 708B are individually activated. The first transmit coil 708A and/or the second transmit coil 708B may be activated based on the presence of the first receive coil 716A or the second receive coil 716B in an energy transfer region of one or both of the transmit coils 708A and 708B. The first transmit coil 708A may transfer energy wirelessly to a receive coil (e.g., the first receive coil 716A or the second receive coil 716B) via the first wireless field. The second transmit coil 708B may transfer energy wirelessly to the receive coil (e.g., the receive coil 716A or the receive coil 716B) via the second wireless field. The first wireless field and the second wireless field may be substantially uncoupled wireless fields. Thus, the first transmit coil 708A and the second transmit coil 708B each may be independently activated, based on their ability to deliver energy to the receive coil.

In a second embodiment of the first operation mode, one of the first transmit coil 708A and the second transmit coil 708B is activated. The activated transmit coil 708A or 708B may transfer energy wirelessly to a receive coil (e.g., the first receive coil 716A or the second receive coil 716B). The transmit coil 708A or 708B that was activated may be activated based on the presence of the first receive coil 716A or the second receive coil 716B in an energy transfer region of the activated transmit coil 708A or 708B. The transmit coil 708A or 708B that was not activated to transfer energy wirelessly to the receive coil may be activated to transfer energy wirelessly to another receiver (e.g., the second receive coil 716B or the first receive coil 716A) if, for example, the another receiver is present in the energy transfer region of the transmit coil 708A or 708B that was not initially activated. The first wireless field and the second wireless field may again be substantially uncoupled wireless fields. Thus, the first transmit coil 708A and the second transmit coil 708B each transmit energy wirelessly to different receive coils.

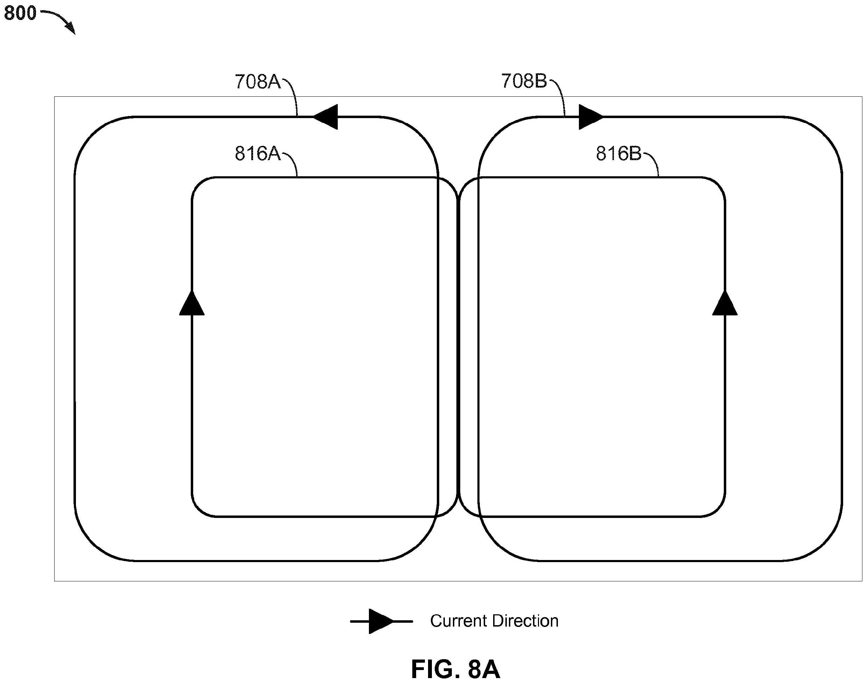

In an embodiment, in the second operation mode, the first transmit coil 708A and the second transmit coil 708B are activated and configured to jointly transfer energy wirelessly to the receiver. The first transmit coil 708A and the second transmit coil 708B may be activated based on the presence of the first receive coil 716A or the second receive coil 716B in an energy transfer region of one or both of the transmit coils 708A and 708B. For example, the first transmit coil 708A and the second transmit coil 708B may together transmit a determined amount of energy wirelessly to the receiver. The first transmit coil 708A and the second transmit coil 708B may each contribute some or all of the determined amount of energy wirelessly transmitted to the receiver. In some embodiments, a larger amount of power may be output in the second operation mode than in the first operation mode. The second operation mode is described in greater detail below with respect to FIGS. 8A-B.

FIG. 8A is a diagram illustrating a top view 800 of two transmit coils transferring energy wirelessly to a dual-loop receive coil 816A and 816B for charging purposes. In an embodiment, the first transmit coil is the first transmit coil 708A and the second transmit coil is the second transmit coil 708B. In a further embodiment, the first receive coil 816A and the second receive coil 816B correspond with the same receiver (e.g., the receiver 508 includes two receive antennas 518). As illustrated in FIG. 8A, the receive coils 816A and/or 816B may be located in close proximity to the first transmit coil 708A and/or the second transmit coil 708B. The receive coils 816A and/or 816B may overlap the first wireless field generated by the first transmit coil 708A and/or the second wireless field generated by the second transmit coil 708B.

As illustrated in FIG. 8A, the direction of current in the first transmit coil 708A may be counterclockwise and the direction of current in the second transmit coil 708B may be clockwise. More precisely, since the current in the first transmit coil 708A and in the second transmit coil 708B is an alternating current (AC) signal, the current in the transmit coils 708A and 708B may be in opposition of phase. Therefore, the direction of current in the first receive coil 816A may be clockwise and the direction of current in the second receive coil 816B may be counterclockwise. More precisely, since the current in the first receive coil 816A and in the second receive coil 816B is an AC signal, the current in the receive coils 816A and 816B may be in opposition of phase.

FIG. 8B is a diagram illustrating a side view 850 of two transmit coils transferring energy wirelessly to a dual-loop receive coil 816A and 816B for charging purposes. In an embodiment, the first transmit coil is the first transmit coil 708A and the second transmit coil is the second transmit coil 708B. Like with FIG. 8A, the first receive coil 816A and the second receive coil 816B correspond with the same receiver (e.g., the receiver 508 includes two receive antennas 518). As illustrated in FIG. 8A, the receive coils 816A and/or 816B may be located in close proximity to the first transmit coil 708A and/or the second transmit coil 708B. The receive coils 816A and/or 816B may overlap the first wireless field generated by the first transmit coil 708A and/or the second wireless field generated by the second transmit coil 708B.

A magnetic shield 852 may be placed over or on top of the receive coils 816A and 816B. A magnetic shield 854 may be placed under or on the bottom of the first transmit coil 708A and the second transmit coil 708B. The magnetic shields 852 and/or 854 may be formed with a ferrite material. The magnetic shields 852 and 854 may serve to prevent or reduce the leaking of energy that is transferred wirelessly.

In an embodiment of the second operation mode, the first transmit coil 708A and the second transmit coil 708B are strongly coupled and there is substantially little energy leakage between the transmitter 404 and the receiver 508. For example, as illustrated in FIG. 8B, the first transmit coil 708A and the second transmit coil 708B may be configured to generate the first and second wireless fields such that the fluxes of the two wireless fields have relatively opposite phases. With the relatively opposite phases, the flux lines of the two wireless fields may be continuous and exist in closed loops. The first receive coil 816A and the second receive coil 816B may be electrically connected in series to form an equivalent single receive coil, by connecting the proper terminals, so that the current flow has the same phase.

A controller, such as the controller 415, is configured to select and/or switch between the two operation modes described herein. The controller 415 may be configured to do the selecting and/or switching in order to enable the efficient and/or safe wireless transfer of power from the transmitter 404 to the receiver 508.

In an embodiment, the controller 415 is configured to measure a displacement between the transmitter 404 (e.g., the first transmit coil 708A and/or the second transmit coil 708B) and the receiver 508 (e.g., the receive coils 716A, 716B, 816A, and/or 816B). Based at least in part on whether a receive coil 716A, 716B, 816A, or 816B (or the receiver 508) is located in an energy transfer region of one or both of the first transmit coil 708A and the second transmit coil 708B, the controller 415 may be configured to activate one or both of the first transmit coil 708A and the second transmit coil 708B (e.g., set a current phase and/or a current power level of the first transmit coil 708A and/or the second transmit coil 708B) such that a level of the energy wirelessly transferred from the first transmit coil 708A and/or the second transmit coil 708B to the receive coil 716A, 716B, 816A, or 816B is sufficient to charge or power a load. The controller 415 may be configured to activate one or both of the first transmit coil 708A and the second transmit coil 708B in the first operation mode and/or the second operation mode.

In some embodiments, the controller 415 is configured to measure a level of coupling between each of the first transmit coil 708A and the second transmit coil 708B and the receive coil 716A, 716B, 816A, or 816B during the first operation mode. In other embodiments, the controller 415 is configured to measure a level of coupling between the first transmit coil 708A and the second transmit coil 708B during the second operation mode. In further embodiments, the controller 415 is configured to measure a level of energy leakage during the first operation mode and/or the second operation mode. As a result of measuring the level of coupling between each of the first transmit coil 708A and the second transmit coil 708B and the receive coil 716A, 716B, 816A, or 816B, measuring the level of coupling between the first transmit coil 708A and the second transmit coil 708B, and/or measuring the level of energy leakage, the controller 415 may be configured to select one of the first operation mode or the second operation mode to transfer energy wirelessly from the first transmit coil 708A and/or the second transmit coil 708B and the receive coils 716A, 716B, 816A, and/or 816B.

In an embodiment, because the displacement and/or the coupling between the first transmit coil 708A and the second transmit coil 708B and the receive coil 716A, 716B, 816A, or 816B is not constant, the controller 415 is configured to monitor at least one parameter. The parameters may include a position of the receiver 508, a position of a receive coil 716A, 716B, 816A, or 816B, the level of energy leakage (e.g., of the energy wirelessly transmitted), the coupling between the first transmit coil 708A and the second transmit coil 708B, and/or the coupling between the first transmit coil 708A and/or the second transmit coil 708B and a receive coil 716A, 716B, 816A, and/or 816B. Based at least in part on a change of at least one of the monitored parameters, the controller 415 may be configured to adjust the phase and/or power level of the first transmit coil 708A and/or the second transmit coil 708B (e.g., switch between the first operation mode and the second operation mode). For example, the controller 415 may be configured to switch between the first operation mode and the second operation mode at least based in part on whether the monitored parameter(s) exceeds a threshold.

In other embodiments, other systems and methods of determining the appropriate operation mode are implemented. For example, sensors, mechanical constraints, mechanical alignments, and/or the like may be included in a wireless power transfer system, such as the wireless power transfer system 100, to assist in determining the appropriate operation mode.

To further improve the efficiency and safety of the wireless transfer of energy between the transmitter 404 and the receiver 508, the transmitter 404 may include a communication module configured to establish a communication link between the transmitter 404 and the receiver 508. For example, the transmitter 404 and the receiver 508 may communicate data and/or information via antennas separate from the transmit coils and receive coils described herein. As another example, the transmitter 404 and the receiver 508 may communicate data and/or information via the transmit coils and receive coils described herein.

In an embodiment, at least two types of information may be transmitted between the transmitter 404 and the receiver 508 via the communication link. The first type of information may include information related to wireless energy transfer capabilities, such as relative displacement, antenna size (e.g., coil size), and/or expected wireless power. The first type of information may be communicated prior to or at the start of the wireless transfer of energy. The second type of information may include information related to energy transfer status updates, such as coupling parameters, energy leakage, and/or displacement. The second type of information may be communicated during the wireless transfer of energy.

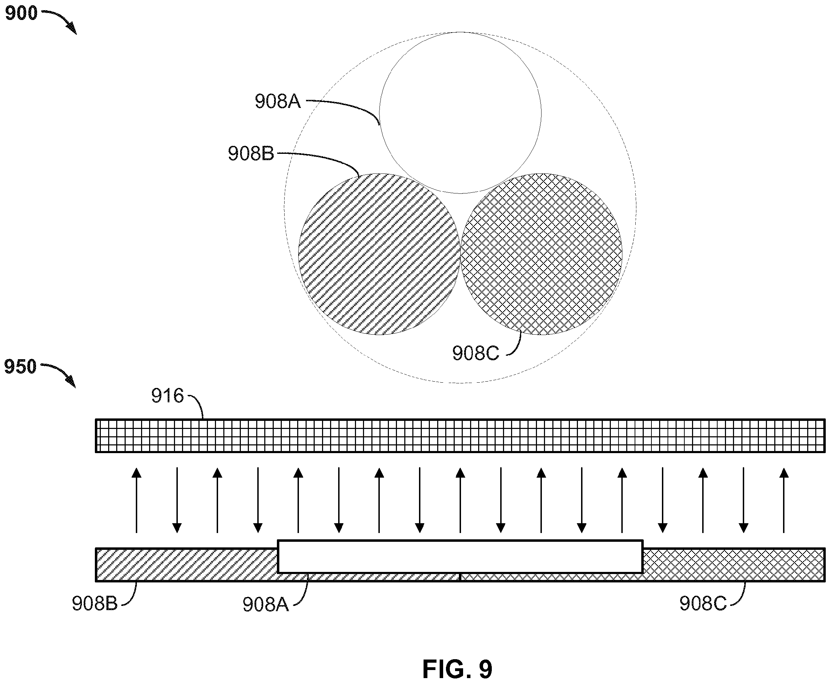

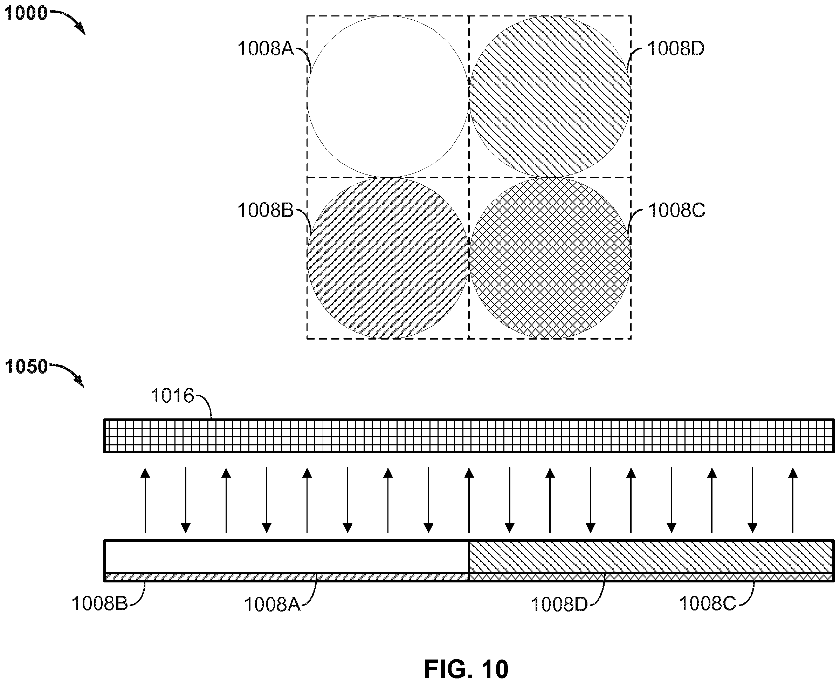

As described above, the various embodiments described herein for the wireless transfer of energy or power may be implemented in instances where more than two transmit coils are present. For example, the transmitter 404 may include three transmit antennas 414, as described below with respect to FIG. 9, or four transmit antennas 414, as described below with respect to FIG. 10. Although FIGS. 9 and 10 illustrate the transmit antennas 414 as being circular in shape, this is merely exemplary as the transmit antennas 414 may be in the form of any shape. Such shape may be based on field distribution requirements.

FIG. 9 is a diagram illustrating a top view 900 and a side view 950 of a first transmit coil 908A, a second transmit coil 908B, and a third transmit coil 908C in a wireless power transfer system, such as the wireless power transfer system 100 of FIG. 1. As illustrated in the top view 900 of FIG. 9, the transmit coils 908A, 908B, and/or 908C may be positioned in a side-by-side configuration (e.g., spatially separated). In an embodiment, the transmit coils 908A, 908B, and/or 908C border each other and are equidistant or nearly equidistant from each other. In another embodiment, not shown, one or more of the transmit coils 908A, 908B, and/or 908C overlap.

As illustrated in the side view 950 of FIG. 9, energy is wireless transferred between the transmit coils 908A, 908B, and/or 908C and a receive coil 916. The first transmit coil 908A may be configured to generate a first wireless field, the second transmit coil 908B may be configured to generate a second wireless field, and the third transmit coil 908C may be configured to generate a third wireless field. In some embodiments, the transmit coils 908A, 908B, and/or 908C may generate a field direction that alternates in each subsequent coil. In other embodiments, the transmit coil 908B may have a phase offset of 120 degrees as compared to the transmit coil 908A. Likewise, the transmit coil 908C may have a phase offset of 120 degrees as compared to the transmit coil 908B, and the transmit coil 908A may have a phase offset of 120 degrees as compared to the transmit coil 908C. Such a phase offset may create a total flux of zero along the center axis (e.g., an axis that extends through the center of the combination of transmit coils 908A, 908B, and 908C), and a sensing coil placed around the combination of transmit coils 908A, 908B, and 908C may allow for more accurate positioning of a receiver (e.g., the receiver 508) to minimize flux leakage.

In an embodiment, the transmit antenna 414 may include one or more of the transmit coils 908A, 908B, and/or 908C. Likewise, the receive antenna 518 may include the receive coil 916, which may be implemented by electrically connecting multiple coils in series, as described above with respect to receive coils 816A and 816B.

In an embodiment, the controller 415 may be coupled directly or indirectly to the transmit coils 908A, 908B, and/or 908C. The transmit coils 908A, 908B, and/or 908C may be operated in the first operation mode or the second operation mode by the controller 415 as described herein. Furthermore, the controller 415 may be configured to activate one or more of the transmit coils 908A, 908B, and/or 908C (e.g., set a current phase and/or a current power level of the transmit coils 908A, 908B, and/or 908C) such that a level of the energy wirelessly transferred from the transmit coils 908A, 908B, and/or 908C to the receive coil 916 and/or any other receive coil present within an energy transfer region of the transmit coils 908A, 908B, and/or 908C is sufficient to charge or power a load. For example, the controller 415 may be configured to individually set a current phase and/or a current power level of the transmit coils 908A, 908B, and/or 908C such that the energy is wirelessly transferred separately from the transmit coils 908A, 908B, and/or 908C to the receive coil 916 and/or any other receive coil present within an energy transfer region of the transmit coils 908A, 908B, and/or 908C. As another example, the controller 415 may be configured to jointly set a current phase and/or a current power level of the transmit coils 908A, 908B, and/or 908C such that the energy is wirelessly transferred collectively from the transmit coils 908A, 908B, and/or 908C to the receive coil 916 and/or any other receive coil present within an energy transfer region of the transmit coils 908A, 908B, and/or 908C.

In an embodiment, the controller 415 may be configured to measure a level of coupling between the receive coil 916 and each of the transmit coils 908A, 908B, and/or 908C, a level of coupling between the transmit coils 908A, 908B, and/or 908C, and/or a level of energy leakage during different operation modes. As a result of the measuring of the level of coupling between the receive coil 916 and each of the transmit coils 908A, 908B, and/or 908C, the measuring of the level of coupling between the transmit coils 908A, 908B, and/or 908C, and/or the measuring of the level of energy leakage, the controller 415 may be configured to select one of the different operations modes to transfer energy wirelessly from the transmit coils 908A, 908B, and/or 908C to the receive coil 916 and/or any other receive coil present in an energy transfer region of the transmit coils 908A, 908B, and/or 908C.

FIG. 10 is a diagram illustrating a top view 1000 and a side view 1050 of a first transmit coil 1008A, a second transmit coil 1008B, a third transmit coil 1008C, and a fourth transmit coil 1008D in a wireless power transfer system, such as the wireless power transfer system 100 of FIG. 1. As illustrated in the top view 1000 of FIG. 10, the transmit coils 1008A, 1008B, 1008C, and/or 1008D may be positioned in a side-by-side configuration. In an embodiment, the transmit coils 1008A, 1008B, 1008C, and/or 1008D border each other and are equidistant or nearly equidistant from each other. In another embodiment, not shown, one or more of the transmit coils 1008A, 1008B, 1008C, and/or 1008D overlap.

As illustrated in the side view 1050 of FIG. 10, energy is wirelessly transferred between the transmit coils 1008A, 1008B, 1008C, and/or 1008D and a receive coil 1016. The first transmit coil 1008A may be configured to generate a first wireless field, the second transmit coil 1008B may be configured to generate a second wireless field, the third transmit coil 1008C may be configured to generate a third wireless field, and the fourth transmit coil 1008D may be configured to generate a fourth wireless field. The transmit coil 1008B may have a phase offset of ninety degrees as compared to the transmit coil 1008A. Likewise, the transmit coil 1008C may have a phase offset of ninety degrees as compared to the transmit coil 1008B, the transmit coil 1008D may have a phase offset of ninety degrees as compared to the transmit coil 1008C, and the transmit coil 1008A may have a phase offset of ninety degrees as compared to the induction coil 1008D.

In an embodiment, the transmit antenna 414 may include one or more of the transmit coils 1008A, 1008B, 1008C, and/or 1008D. Likewise, the receive antenna 518 may include the receive coil 1016, which may be implemented by electrically connecting multiple coils in series, as described above with respect to receive coils 816A and 816B.

In an embodiment, the controller 415 may be coupled directly or indirectly to the transmit coils 1008A, 1008B, 1008C, and/or 1008D. The transmit coils 1008A, 1008B, 1008C, and/or 1008D may be operated in the first operation mode or the second operation mode by the controller 415 as described herein. Furthermore, the controller 415 may be configured to activate one or more of the transmit coils 1008A, 1008B, 1008C, and/or 1008D (e.g., set a current phase and/or a current power level of the transmit coils 1008A, 1008B, 1008C, and/or 1008D) such that a level of the energy wirelessly transferred from the transmit coils 1008A, 1008B, 1008C, and/or 1008D to the receive coil 1016 and/or any other receive coil present within an energy transfer region of the transmit coils 1008A, 1008B, 1008C, and/or 1008D is sufficient to charge or power a load. For example, the controller 415 may be configured to individually set a current phase and/or a current power level of the transmit coils 1008A, 1008B, 1008C, and/or 1008D such that the energy is wirelessly transferred separately from the transmit coils 1008A, 1008B, 1008C, and/or 1008D to the receive coil 1016 and/or any other receive coil present within an energy transfer region of the transmit coils 1008A, 1008B, 1008C, and/or 1008D. As another example, the controller 415 may be configured to jointly set a current phase and/or a current power level of the transmit coils 1008A, 1008B, 1008C, and/or 1008D such that the energy is wirelessly transferred collectively from the transmit coils 1008A, 1008B, 1008C, and/or 1008D to the receive coil 1016 and/or any other receive coil present within an energy transfer region of the transmit coils 1008A, 1008B, 1008C, and/or 1008D.

In an embodiment, the controller 415 may be configured to measure a level of coupling between the receive coil 1016 and each of the transmit coils 1008A, 1008B, 1008C, and/or 1008D, a level of coupling between the transmit coils 1008A, 1008B, 1008C, and/or 1008D, and/or a level of energy leakage during different operation modes. As a result of the measuring of the level of coupling between the receive coil 1016 and each of the transmit coils 1008A, 1008B, 1008C, and/or 1008D, the measuring of the level of coupling between the transmit coils 1008A, 1008B, 1008C, and/or 1008D, and/or the measuring of the level of energy leakage, the controller 415 may be configured to select one of the different operations modes to transfer energy wirelessly from the transmit coils 1008A, 1008B, 1008C, and/or 1008D to the receive coil 1016 and/or any other receive coil present in an energy transfer region of the transmit coils 1008A, 1008B, 1008C, and/or 1008D.

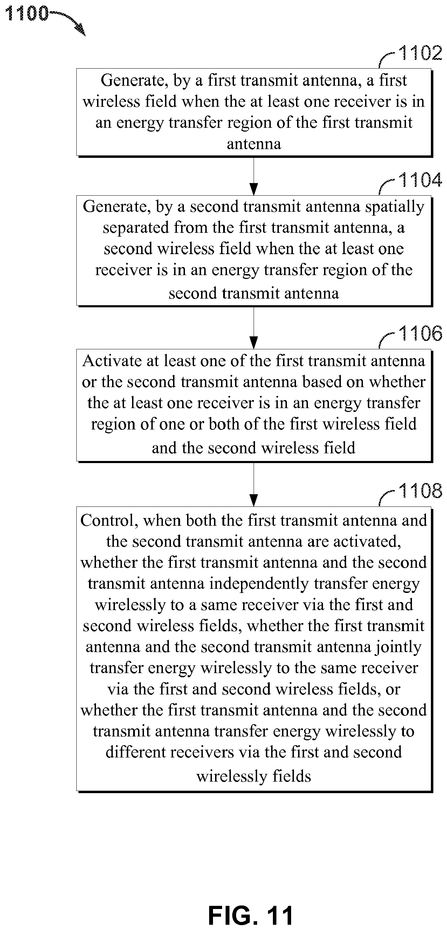

FIG. 11 is a flowchart of an exemplary method 1100 for transferring energy wirelessly. In an embodiment, the steps in flowchart 1100 may be performed by the transmitter 404. Although the method of flowchart 1100 is described herein with reference to a particular order, in various embodiments, blocks herein may be performed in a different order, or omitted, and additional blocks may be added. A person having ordinary skill in the art will appreciate that the method of flowchart 1100 may be implemented in any device that may be configured to charge or supply power to another device via the wireless transfer of power.

At block 1102, a first wireless field is generated by a first transmit antenna when the at least one receiver is in an energy transfer region of the first transmit antenna. In an embodiment, the first transmit antenna is the first transmit coil 708A. In a further embodiment, current in the first transmit antenna flows in a first direction when the first transmit antenna is activated. In an embodiment, the at least one receive antenna is one of the receive coils 716A, 716B, 816A, 816B, 916, and/or 1016. At block 1104, a second wireless field is generated by a second transmit antenna spatially separated from the first transmit antenna when the at least one receiver is in an energy transfer region of the second transmit antenna. In an embodiment, current in the second transmit antenna flows in a second direction different than the first direction when the second transmit antenna is activated.

At block 1106, at least one of the first transmit antenna or the second transmit antenna is activated based on whether the at least one receiver is in an energy transfer region of one or both of the first wireless field and the second wireless field. At block 1108, when both the first transmit antenna and the second transmit antenna are activated, whether the first transmit antenna and the second transmit antenna independently transfer energy wirelessly to a same receiver via the first and second wireless fields, whether the first transmit antenna and the second transmit antenna jointly transfer energy wirelessly to the same receiver via the first and second wireless fields, or whether the first transmit antenna and the second transmit antenna transfer energy wirelessly to different receivers via the first and second wirelessly fields is controlled.

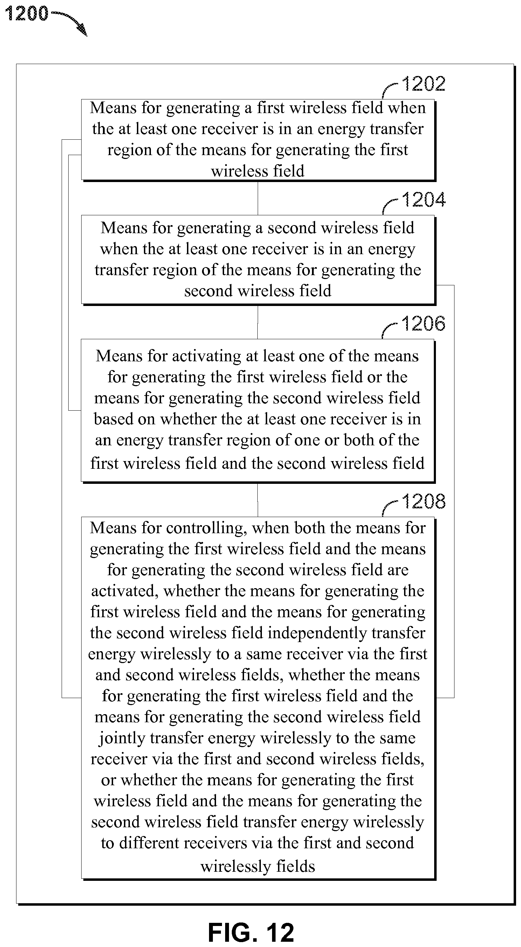

FIG. 12 is a functional block diagram of a transmitter 1200, in accordance with an exemplary embodiment. Transmitter 1200 comprises means 1202, means 1204, means 1206, and means 1208 for the various actions discussed with respect to FIGS. 1-10. The transmitter 1200 includes means 1202 for generating a first wireless field when the at least one receiver is in an energy transfer region of the means for generating the first wireless field. In an embodiment, means 1202 for generating a first wireless field when the at least one receiver is in an energy transfer region of the means for generating the first wireless field may be configured to perform one or more of the functions discussed above with respect to block 1102. The transmitter 1200 includes means 1204 for generating a second wireless field when the at least one receiver is in an energy transfer region of the means for generating the second wireless field. In an embodiment, means 1204 for generating a second wireless field when the at least one receiver is in an energy transfer region of the means for generating the second wireless field may be configured to perform one or more of the functions discussed above with respect to block 1104.

The transmitter 1200 further includes means 1206 for activating at least one of the means for generating the first wireless field or the means for generating the second wireless field based on whether the at least one receiver is in an energy transfer region of one or both of the first wireless field and the second wireless field. In an embodiment, means 1206 for activating at least one of the means for generating the first wireless field or the means for generating the second wireless field based on whether the at least one receiver is in an energy transfer region of one or both of the first wireless field and the second wireless field may be configured to perform one or more of the functions discussed above with respect to block 1106. The transmitter 1200 further includes means 1208 for controlling, when both the means for generating the first wireless field and the means for generating the second wireless field are activated, whether the means for generating the first wireless field and the means for generating the second wireless field independently transfer energy wirelessly to a same receiver via the first and second wireless fields, whether the means for generating the first wireless field and the means for generating the second wireless field jointly transfer energy wirelessly to the same receiver via the first and second wireless fields, or whether the means for generating the first wireless field and the means for generating the second wireless field transfer energy wirelessly to different receivers via the first and second wirelessly fields. In an embodiment, means 1208 for controlling, when both the means for generating the first wireless field and the means for generating the second wireless field are activated, whether the means for generating the first wireless field and the means for generating the second wireless field independently transfer energy wirelessly to a same receiver via the first and second wireless fields, whether the means for generating the first wireless field and the means for generating the second wireless field jointly transfer energy wirelessly to the same receiver via the first and second wireless fields, or whether the means for generating the first wireless field and the means for generating the second wireless field transfer energy wirelessly to different receivers via the first and second wirelessly fields may be configured to perform one or more of the functions discussed above with respect to block 1108.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations. The means for generating a first wireless field comprises the first transmit coil 708A. The means for generating a second wireless field comprises the second transmit coil 708B. The means for activating and the means for controlling comprise the controller 415.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. The described functionality may be implemented in varying ways for each particular application, but such implementation decisions should not be interpreted as causing a departure from the scope of the embodiments of the invention.

The various illustrative blocks, modules, and circuits described in connection with the embodiments disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art. A storage medium is coupled to the processor such that the processor can read information from, and write information to, the storage medium. In the alternative, the storage medium may be integral to the processor. Disk and disc, as used herein, includes compact disc (CD), laser disc, optical disc, digital versatile disc (DVD), floppy disk and blu ray disc where disks usually reproduce data magnetically, while discs reproduce data optically with lasers. Combinations of the above should also be included within the scope of computer readable media. The processor and the storage medium may reside in an ASIC. The ASIC may reside in a user terminal. In the alternative, the processor and the storage medium may reside as discrete components in a user terminal.

For purposes of summarizing the disclosure, certain aspects, advantages and novel features of the inventions have been described herein. It is to be understood that not necessarily all such advantages may be achieved in accordance with any particular embodiment of the invention. Thus, the invention may be embodied or carried out in a manner that achieves or optimizes one advantage or group of advantages as taught herein without necessarily achieving other advantages as may be taught or suggested herein.

## Claims

1. An apparatus for transferring energy wirelessly to at least one receive antenna of at least one receiver, the apparatus comprising:
a first transmit antenna (708A) configured to generate a first wireless field when the at least one receiver (706) is in an energy transfer region of the first transmit antenna;
a second transmit antenna (708B) spatially separated from the first transmit antenna, the second transmit antenna configured to generate a second wireless field when the at least one receiver (706) is in an energy transfer region of the second transmit antenna; and
a controller (415) operationally coupled to the first transmit antenna and the second transmit antenna and configured to activate at least one of the first transmit antenna or the second transmit antenna based on whether the at least one receiver is in an energy transfer region of one or both of the first wireless field (708A) and the second wireless field (708B),
the controller further configured to control, when both the first transmit antenna and the second transmit antenna are activated a mode of operation of the apparatus, and wherein the controller is further configured to measure at least one of a first coupling level between the first transmit antenna and the at least one receive antenna, a second coupling level between the first transmit antenna and the second transmit antenna, or a leakage level of the energy transfer between the first transmit antenna and the at least one receive antenna and selecting the mode of operation based on the measurement wherein said mode of operation is selected from the first transmit antenna and the second transmit antenna independently and concurrently transfer energy wirelessly to a same receiver via the first (708A) and second (708B) wireless fields, the first transmit antenna and the second transmit antenna jointly transfer energy wirelessly to the same receiver via the first and second wireless fields, or the first transmit antenna and the second transmit antenna transfer energy wirelessly to different receivers via the first and second wireless fields.

2. The apparatus of Claim 1, wherein the controller is further configured to adjust at least one of a first flux phase or a first flux strength of the first wireless field, or a second flux phase or a second flux strength of the second wireless field via at least one of the first transmit antenna or the second transmit antenna.

3. The apparatus of Claim 2, wherein the controller (415) is further configured to adjust the at least one of the first flux phase of the first wireless field or the second flux phase of the second wireless field via the at least one of the first transmit antenna or the second transmit antenna such that the first flux phase is substantially opposite to the second flux phase and flux lines of the first wireless field and the second wireless field are continuous and exist in closed loops.

4. The apparatus of Claim 1, further comprising a communication module operationally coupled to the controller (415) and configured to establish a communication link between the apparatus and the at least one receiver, wherein the controller is further configured to:
receive at least one charging requirement from the at least one receiver via the communication link; and
set the phase of at least one of the first transmit antenna or the second transmit antenna at least partially based on the at least one charging requirement received from the at least one receiver.

5. The apparatus of Claim 4, wherein the communication module is further configured to establish another communication link between the apparatus and another receiver, wherein the controller is further configured to:
receive at least another charging requirement from the another receiver via the another communication link;
activate the first transmit antenna to transfer energy to the at least one receiver via the first wireless field; and
activate the second transmit antenna to transfer energy to the another receiver via the second wireless field.

6. A method of transferring energy wirelessly from a transmitter (404) to at least one receive antenna of at least one receiver, the method comprising:
generating (1102), by a first transmit antenna (708A) of the transmitter (404), a first wireless field when the at least one receiver is in an energy transfer region of the first transmit antenna (708A);
generating (1104), by a second transmit antenna (708B) of the transmitter (404), the second transmit antenna spatially separated from the first transmit antenna (708A), a second wireless field when the at least one receiver is in an energy transfer region of the second transmit antenna (708B);
activating (1106) at least one of the first transmit antenna (708A) or the second transmit antenna (708B) based on whether the at least one receiver is in an energy transfer region of one or both of the first wireless field and the second wireless field; and
controlling (1108), when both the first transmit antenna (708A) and the second transmit antenna (708B) are activated, a mode of operation of the transmitter, wherein controlling further comprises measuring at least one of a first coupling level between the first transmit antenna and the at least one receive antenna, a second coupling level between the first transmit antenna and the second transmit antenna, or a leakage level of the energy transfer between the first transmit antenna and the at least one receive antenna and selecting the mode of operation based on the measurement wherein said mode of operation is selected from the first transmit antenna and the second transmit antenna independently and concurrently transfer energy wirelessly to a same receiver via the first and second wireless fields; the first transmit antenna and the second transmit antenna jointly transfer energy wirelessly to the same receiver via the first and second wireless fields; or the first transmit antenna and the second transmit antenna transfer energy wirelessly to different receivers via the first and second wireless fields.

7. The method of Claim 6, further comprising adjusting at least one of a first flux phase or a first flux strength of the first wireless field, or a second flux phase or a second flux strength of the second wireless field via at least one of the first transmit antenna (708A) or the second transmit antenna (708B).

8. The method of Claim 7, wherein adjusting at least one of a first flux phase or a first flux strength of the first wireless field comprises adjusting the at least one of the first flux phase of the first wireless field or the second flux phase of the second wireless field via the at least one of the first transmit antenna (708A) or the second transmit antenna (708B) such that the first flux phase is substantially opposite to the second flux phase and flux lines of the first wireless field and the second wireless field are continuous and exist in closed loops.

9. The method of Claim 6, further comprising:
establishing a communication link between the first transmit antenna (708A) or the second transmit antenna (708B) and the at least one receiver;
receiving at least one charging requirement from the at least one receiver via the communication link; and
setting the phase of at least one of the first transmit antenna (708A) or the second transmit antenna (708B) at least partially based on the at least one charging requirement received from the at least one receiver.

10. The method of Claim 9, further comprising:
establishing another communication link between the first transmit antenna (708A) or the second transmit antenna (708B) and another receiver;
receiving at least another charging requirement from the another receiver via the another communication link;
activating the first transmit antenna (708A) to transfer energy to the at least one receiver via the first wireless field; and
activating the second transmit antenna (708B) to transfer energy to the another receiver via the second wireless field.

11. A non-transitory computer-readable medium comprising code that, when executed by a processing module :
generate, using a first transmit antenna, a first wireless field when at least one receiver is in an energy transfer region of the first transmit antenna;
generate, using a second transmit antenna spatially separated from the first transmit antenna, a second wireless field when the at least one receiver is in an energy transfer region of the second transmit antenna;
activate at least one of the first transmit antenna or the second transmit antenna based on whether the at least one receiver is in an energy transfer region of one or both of the first wireless field and the second wireless field; and
control, when both the first transmit antenna and the second transmit antenna are activated, a mode of operation of the transmitter, wherein controlling further comprises measuring at least one of a first coupling level between the first transmit antenna and the at least one receive antenna, a second coupling level between the first transmit antenna and the second transmit antenna, or a leakage level of the energy transfer between the first transmit antenna and the at least one receive antenna and selecting the mode of operation based on the measurement wherein said mode of operation is selected from, the first transmit antenna and the second transmit antenna independently and concurrently transfer energy wirelessly to a same receiver via the first and second wireless fields, the first transmit antenna and the second transmit antenna jointly transfer energy wirelessly to the same receiver via the first and second wireless fields, or the first transmit antenna and the second transmit antenna transfer energy wirelessly to different receivers via the first and second wireless fields.

## Patentansprüche

1. Eine Vorrichtung zum drahtlosen Transferieren von Energie an wenigstens eine Empfangsantenne wenigstens eines Empfängers, wobei die Vorrichtung Folgendes aufweist:
wenigstens eine Sendeantenne (708A), die konfiguriert ist zum Generieren eines ersten Drahtlosfeldes, wenn der wenigstens ein Empfänger (706) in einer Energietransferregion der ersten Sendeantenne ist;
eine zweite Sendeantenne (708B), die räumlich von der ersten Sendeantenne getrennt ist, wobei die zweite Sendeantenne konfiguriert ist zum Generieren eines zweiten Drahtlosfeldes, wenn der erste Empfänger (706) in einer Energietransferregion der zweiten Sendeantenne ist; und
eine Steuervorrichtung bzw. einen Controller (415), der betriebsmäßig an die erste Sendeantenne und die zweite Sendeantenne gekoppelt ist und konfiguriert ist zum Aktivieren wenigstens einer von der ersten Sendeantenne oder der zweiten Sendeantenne basierend darauf, ob der wenigstens eine Empfänger in einer Energietransferregion von einem oder beidem von dem ersten Drahtlosfeld (708A) und dem zweiten Drahtlosfeld (708B) ist,
wobei der Controller weiter konfiguriert ist zum Steuern, wenn sowohl die erste Sendeantenne als auf die zweite Sendeantenne aktiviert sind, eines Betriebsmodus der Vorrichtung, und wobei der Controller weiter konfiguriert ist zum Messen von wenigstens einem von einem ersten Koppelungspegel zwischen der ersten Sendeantenne und der wenigstens einen Empfangsantenne, einem zweiten Koppelungspegel zwischen der ersten Sendeantenne und der zweiten Sendeantenne oder einem Verlustpegel des Energietransfers zwischen der ersten Sendeantenne und der wenigstens einen Empfangsantenne und Auswählen des Betriebsmodus basierend auf der Messung, wobei der Betriebsmodus ausgewählt wird von: die erste Sendeantenne und zweite Sendeantenne transferieren unabhängig und gleichzeitig drahtlos Energie an einen gleichen Empfänger über die ersten (708A) und zweiten (708B) Drahtlosfelder, die erste Sendeantenne und die zweite Sendeantenne transferieren gemeinsam drahtlos Energie an den gleichen Empfänger über die ersten und zweiten Drahtlosfelder, oder die erste Sendeantenne und die zweite Sendeantenne transferieren drahtlos Energie an unterschiedliche Empfänger über die ersten und zweiten Drahtlosfelder.

2. Vorrichtung nach Anspruch 1, wobei der Controller weiter konfiguriert ist zum Anpassen von wenigstens einem von einer ersten Flussphase oder einer ersten Flussstärke des ersten Drahtlosfeldes, oder einer zweiten Flussphase oder einer zweiten Flussstärke des zweiten Drahtlosfeldes über wenigstens eine von der ersten Sendeantenne oder der zweiten Sendeantenne.

3. Vorrichtung nach Anspruch 2, wobei der Controller (415) weiter konfiguriert ist zum Anpassen des wenigstens einen von der ersten Flussphase des ersten Drahtlosfeldes oder der zweiten Flussphase des zweiten Drahtlosfeldes über die wenigstens eine von der ersten Sendeantenne oder der zweiten Sendeantenne, so dass die erste Flussphase im Wesentlichen entgegengesetzt ist zu der zweiten Flussphase und Fluss- bzw. Feldlinien des ersten Drahtlosfeldes und des zweiten Drahtlosfeldes durchgängig sind und in geschlossenen Schleifen vorliegen.

4. Vorrichtung nach Anspruch 1, die weiter ein Kommunikationsmodul aufweist, das optional an den Controller (415) gekoppelt ist und konfiguriert ist zum Einrichten einer Kommunikationsverbindung zwischen der Vorrichtung und dem wenigstens einen Empfänger, wobei die Vorrichtung weiter konfiguriert ist zum:
Empfangen wenigstens einer Ladeanforderung von dem wenigstens einen Empfänger über die Kommunikationsverbindung; und
Festlegen bzw. Einstellen der Phase von wenigstens einem von der ersten Sendeantenne oder der zweiten Sendeantenne wenigstens teilweise basierend auf der wenigstens einen Ladeanforderung, die von dem wenigstens einen Empfänger empfangen wird.

5. Vorrichtung nach Anspruch 4, wobei das Kommunikationsmodul weiter konfiguriert ist zum Einrichten einer weiteren Kommunikationsverbindung zwischen der Vorrichtung und einem weiteren Empfänger, wobei der Controller weiter konfiguriert ist zum:
Empfangen wenigstens einer weiteren Ladeanforderung von dem weiteren Empfänger über die weitere Kommunikationsverbindung;
Aktivieren der ersten Sendeantenne zum Transferieren von Energie an den wenigstens einen Empfänger über das erste Drahtlosfeld; und
Aktivieren der zweiten Sendeantenne zum Transferieren von Energie an den weiteren Empfänger über das zweite Drahtlosfeld.

6. Ein Verfahren zum drahtlosen Transferieren von Energie von einem Sender (404) an wenigstens eine Empfangsantenne wenigstens eines Empfängers, wobei das Verfahren Folgendes aufweist:
Generieren (1102), durch eine erste Sendeantenne (708A) des Senders (404), eines ersten Drahtlosfeldes, wenn der wenigstens eine Empfänger in einer Energietransferregion der ersten Sendeantenne (708A) ist;
Generieren (1104), durch eine zweite Sendeantenne (708B) des Senders (104), wobei die zweite Sendeantenne räumlich von der ersten Sendeantenne (708A) getrennt ist, eines zweiten Drahtlosfeldes, wenn der wenigstens eine Empfänger in einer Energietransferregion der zweiten Sendeantenne (708B) ist;
Aktivieren (1106) wenigstens einer von der ersten Sendeantenne (708A) oder der zweiten Sendeantenne (708B) basierend darauf, ob der wenigstens eine Empfänger in einer Energietransferregion von einem oder beiden von dem ersten Drahtlosfeld und dem zweiten Drahtlosfeld ist; und
Steuern (1108), wenn sowohl die erste Sendeantenne (708A) als auch die zweite Sendeantenne (708B) aktiviert sind, eines Betriebsmodus des Senders, wobei das Steuern weiter Messen von wenigstens einem von Folgendem aufweist: eines ersten Koppelungspegels zwischen der ersten Sendeantenne und der wenigstens einen Empfangsantenne, eines zweiten Koppelungspegels zwischen der ersten Sendeantenne und der zweiten Sendeantenne oder eines Verlustpegels des Energietransfers zwischen der ersten Sendeantenne und der wenigstens einen Empfangsantenne und Auswählen des Betriebsmodus basierend auf der Messung, wobei der Betriebsmodus ausgewählt wird von
die erste Sendeantenne und die zweite Sendeantenne transferieren unabhängig und gleichzeitig Energie an den gleichen Empfänger über die ersten und zweiten Drahtlosfelder;
die erste Sendeantenne und die zweite Sendeantenne transferieren gemeinsam drahtlos Energie an den gleichen Empfänger über die ersten und zweiten Drahtlosfelder;
oder die erste Sendeantenne und die zweite Sendeantenne transferieren drahtlos Energie an unterschiedliche Empfänger über die ersten und zweiten Drahtlosfelder.

7. Verfahren nach Anspruch 6, das weiter Anpassen von wenigstens einem von einer ersten Flussphase oder einer ersten Flussstärke des ersten Drahtlosfeldes oder einer zweiten Flussphase oder einer zweiten Flussstärke des zweiten Drahtlosfeldes über wenigstens eine von der ersten Sendeantenne (708A) oder zweiten Sendeantenne (708B) aufweist.

8. Verfahren nach Anspruch 7, wobei das Anpassen von wenigstens einem von einer ersten Flussphase oder einer ersten Flussstärke des ersten Drahtlosfeldes Anpassen des wenigstens einen von der ersten Flussphase des ersten Drahtlosfeldes oder der zweiten Flussphase des zweiten Drahtlosfeldes über die wenigstens eine von der ersten Sendeantenne (708A) oder der zweiten Sendeantenne (708B) aufweist, so dass die erste Flussphase im Wesentlichen entgegengesetzt zu der zweiten Flussphase ist und Fluss- bzw. Feldlinien des ersten Drahtlosfeldes und zweiten Drahtlosfeldes durchgängig sind und in geschlossenen Schleifen vorliegen.

9. Verfahren nach Anspruch 6, das weiter Folgendes aufweist:
Einrichten einer Kommunikationsverbindung zwischen der ersten Sendeantenne (708A) oder der zweiten Sendeantenne (708B) und dem wenigstens einen Empfänger;
Empfangen wenigstens einer Ladeanforderung von dem ersten Empfänger über die Kommunikationsverbindung; und
Einstellen bzw. Setzen der Phase von wenigstens einem von der ersten Sendeantenne (708A) oder der zweiten Sendeantenne (708B) wenigstens teilweise basierend auf der wenigstens einen Ladeanforderung, die von dem wenigstens einen Empfänger empfangen wird.

10. Verfahren nach Anspruch 9, das weiter Folgendes aufweist:
Einrichten einer weiteren Kommunikationsverbindung zwischen der ersten Sendeantenne (708A) oder der zweiten Sendeantenne (708B) und einem weiteren Empfänger;
Empfangen wenigstens einer Ladeanforderung von dem weiteren Empfänger über die weitere Kommunikationsverbindung;
Aktivieren der ersten Sendeantenne (708A) zum Transferieren von Energie an den wenigstens einen Empfänger über das erste Drahtlosfeld; und
Aktivieren der zweiten Sendeantenne (708B) zum Transferieren von Energie an den weiteren Empfänger über das zweite Drahtlosfeld.

11. Ein nicht transitorisches computerlesbares Medium, das Code aufweist, der, wenn er durch einen Verarbeitungsmodul ausgeführt wird:
unter Verwendung einer ersten Sendeantenne, ein erstes Drahtlosfeld generiert, wenn der wenigstens eine Empfänger in einer Energietransferregion der ersten Sendeantenne ist;
unter Verwendung einer zweiten Sendeantenne, die räumlich von der ersten Sendeantenne getrennt ist, ein zweites Drahtlosfeld generiert, wenn der wenigstens eine Empfänger in einer Energietransferregion der zweiten Sendeantenne ist;
wenigstens eine von der ersten Sendeantenne oder der zweiten Sendeantenne aktiviert basierend darauf, ob der wenigstens eine Empfänger in einer Energietransferregion von einem oder beiden von dem ersten Drahtlosfeld und dem zweiten Drahtlosfeld ist; und
wenn sowohl die erste Sendeantenne als auch die zweite Sendeantenne aktiviert sind, einen Betriebsmodus des Senders steuert, wobei das Steuern weiter Messen von wenigstens einem von Folgendem aufweist: eines ersten Koppelungspegels zwischen der ersten Sendeantenne und der wenigstens einen Empfangsantenne, eines zweiten Koppelungspegels zwischen der ersten Sendeantenne und der zweiten Sendeantenne oder eines Verlustpegels des Energietransfers zwischen der ersten Sendeantenne und der wenigstens einen Empfangsantenne und Auswählen des Betriebsmodus basierend auf der Messung, wobei der Betriebsmodus ausgewählt wird von: die erste Sendeantenne und die zweite Sendeantenne transferieren unabhängig und gleichzeitig Energie an den gleichen Empfänger über die ersten und zweiten Drahtlosfelder; die erste Sendeantenne und die zweite Sendeantenne transferieren gemeinsam drahtlos Energie an den gleichen Empfänger über die ersten und zweiten Drahtlosfelder, oder die erste Sendeantenne und die zweite Sendeantenne transferieren drahtlos Energie an unterschiedliche Empfänger über die ersten und zweiten Drahtlosfelder.

## Revendications

1. Appareil pour transférer de l'énergie sans fil à au moins une antenne de réception d'au moins un récepteur, l'appareil comprenant :
une première antenne d'émission (708A) configurée pour générer un premier champ sans fil lorsque le au moins un récepteur (706) se trouve dans une région de transfert d'énergie de la première antenne d'émission ;
une deuxième antenne d'émission (708B) séparée spatialement de la première antenne d'émission, la deuxième antenne d'émission étant configurée pour générer un deuxième champ sans fil lorsque le au moins un récepteur (706) est dans une région de transfert d'énergie de la deuxième antenne d'émission ; et
un contrôleur (415) couplé de manière opérationnelle à la première antenne d'émission et à la deuxième antenne d'émission et configuré pour activer au moins l'une de la première antenne d'émission ou la deuxième antenne d'émission selon que le au moins un récepteur est dans une région de transfert d'énergie de l'un parmi le premier champ sans fil (708A) et le deuxième champ sans fil (708B), ou les deux ;
le contrôleur étant configuré en outre pour commander, lorsque la première antenne d'émission et la deuxième antenne d'émission sont toutes deux activées, un mode de fonctionnement de l'appareil, et dans lequel le contrôleur est en outre configuré pour mesurer au moins l'un d'un premier niveau de couplage entre la première antenne d'émission et l'au moins une antenne de réception, un deuxième niveau de couplage entre la première et la deuxième antenne d'émission, ou un niveau de fuite du transfert d'énergie entre la première antenne d'émission et la au moins une antenne de réception et réalisant la sélection du mode de fonctionnement sur la base de la mesure, dans lequel ledit mode de fonctionnement est sélectionné parmi la première antenne d'émission et la deuxième antenne d'émission transférant indépendamment et simultanément de l'énergie sans fil à un même récepteur via les premier (708A) et deuxième (708B) champs sans fil, la première antenne d'émission et la deuxième antenne d'émission transférant conjointement de l'énergie sans fil au même récepteur via les premier et deuxième champs sans fil, ou la première antenne d'émission et la deuxième antenne d'émission transférant de l'énergie sans fil à différents récepteurs via les premier et deuxième champs sans fil.

2. Appareil selon la revendication 1, dans lequel le contrôleur est en outre configuré pour ajuster au moins l'une parmi une première phase de flux ou une première intensité de flux du premier champ sans fil, ou une deuxième phase de flux ou une deuxième intensité de flux du deuxième champ sans fil via au moins l'une des première ou deuxième antennes d'émission.

3. Appareil selon la revendication 2, dans lequel le contrôleur (415) est en outre configuré pour ajuster la au moins une de la première phase de flux du premier champ sans fil ou la deuxième phase de flux du deuxième champ sans fil via la au moins une de la première antenne d'émission ou la deuxième antenne d'émission, de sorte que la première phase de flux est sensiblement opposée à la deuxième phase de flux et les lignes de flux du premier champ sans fil et le deuxième champ sans fil sont continues et existent en boucles fermés.

4. Appareil selon la revendication 1, comprenant en outre un module de communication couplé de manière opérationnelle au contrôleur (415) et configuré pour établir une liaison de communication entre l'appareil et le au moins un récepteur, dans lequel le contrôleur est en outre configuré pour :
recevoir au moins une exigence de charge du au moins un récepteur via la liaison de communication ; et
régler la phase d'au moins une des première ou deuxième antennes d'émission, au moins partiellement sur la au moins une exigence de charge reçue du au moins un récepteur.

5. Appareil selon la revendication 4, dans lequel le module de communication est en outre configuré pour établir une autre liaison de communication entre l'appareil et un autre récepteur, dans lequel le contrôleur est en outre configuré pour :
recevoir au moins une autre exigence de charge de l'autre récepteur via l'autre liaison de communication ;
activer la première antenne d'émission pour transférer de l'énergie à l'au moins un récepteur via le premier champ sans fil ; et
activer la deuxième antenne d'émission pour transférer l'énergie audit autre récepteur via le deuxième champ sans fil.

6. Procédé de transfert d'énergie sans fil d'un émetteur (404) à au moins une antenne de réception d'au moins un récepteur, le procédé comprenant les étapes consistant à :
générer (1102), par une première antenne d'émission (708A) de l'émetteur (404), un premier champ sans fil lorsque le au moins un récepteur se trouve dans une région de transfert d'énergie de la première antenne d'émission (708A) ;
générer (1104), par une deuxième antenne d'émission (708B) de l'émetteur (404), la deuxième antenne d'émission étant séparée spatialement de la première antenne d'émission (708A), un deuxième champ sans fil lorsque le au moins un récepteur est dans une région de transfert d'énergie de la deuxième antenne d'émission (708B) ;
activer (1106) au moins l'une de la première antenne d'émission (708A) ou de la deuxième antenne d'émission (708B) en fonction du fait que le au moins un récepteur se trouve dans une région de transfert d'énergie d'un ou des deux champs sans fil et du deuxième champ sans fil ; et
commander (1108), lorsque la première antenne d'émission (708A) et la deuxième antenne d'émission (708B) sont activées, un mode de fonctionnement de l'émetteur, dans lequel la commande comprend en outre la mesure d'au moins un d'un premier niveau de couplage entre la première antenne d'émission et la au moins une antenne de réception, un deuxième niveau de couplage entre la première et la deuxième antenne d'émission, ou un niveau de fuite du transfert d'énergie entre la première antenne d'émission et la au moins une antenne de réception et la sélection du mode de fonctionnement sur la base de la mesure dans lequel ledit mode de fonctionnement est sélectionné parmi
la première antenne d'émission et la deuxième antenne d'émission transférant indépendamment et simultanément de l'énergie sans fil à un même récepteur via les premier et deuxième champs sans fil ;
la première antenne d'émission et la deuxième antenne d'émission transférant conjointement de l'énergie sans fil au même récepteur via les premier et deuxième champs sans fil ; ou
la première antenne d'émission et la deuxième antenne d'émission transférant de l'énergie sans fil à différents récepteurs via les premier et deuxième champs sans fil.

7. Procédé selon la revendication 6, comprenant en outre le réglage d'au moins l'une d'une première phase de flux ou d'une première intensité de flux du premier champ sans fil, ou d'une deuxième phase de flux ou d'une deuxième intensité de flux du deuxième champ sans fil via au moins une parmi la première antenne d'émission (708A) ou la deuxième antenne d'émission (708B).

8. Procédé selon la revendication 7, dans lequel le réglage d'au moins l'une d'une première phase de flux ou d'une première intensité de flux du premier champ sans fil comprend le réglage de la au moins l'une de la première phase de flux du premier champ sans fil ou de la deuxième phase de flux du deuxième champ sans fil par l'intermédiaire de la au moins une de la première antenne d'émission (708A) ou la deuxième antenne d'émission (708B), de façon que la première phase de flux soit sensiblement opposée à la deuxième phase de flux et aux lignes de flux du premier champ sans fil et le deuxième champ sans fil soient continues et existent en boucle fermée.

9. Procédé selon la revendication 6, comprenant en outre :
l'établissement d'une liaison de communication entre la première antenne d'émission (708A) ou la deuxième antenne d'émission (708B) et le au moins un récepteur ;
la réception d'au moins une exigence de charge du au moins un récepteur via la liaison de communication ; et
le réglage de la phase d'au moins une parmi la première antenne d'émission (708A) ou la deuxième antenne d'émission (708B) au moins partiellement basée sur l'au moins une exigence de charge reçue du au moins un récepteur.

10. Procédé selon la revendication 9, comprenant en outre :
l'établissement d'une autre liaison de communication entre la première antenne d'émission (708A) ou la deuxième antenne d'émission (708B) et un autre récepteur ;
la réception d'au moins une autre exigence de charge provenant de l'autre récepteur via la deuxième liaison de communication ;
l'activation de la première antenne d'émission (708A) pour transférer l'énergie audit ou au moins un récepteur via le premier champ sans fil ; et
l'activation de la deuxième antenne d'émission (708B) pour transférer l'énergie audit autre récepteur via le deuxième champ sans fil.

11. Support non transitoire lisible par ordinateur comprenant un code qui, lorsqu'il est exécuté par un module de traitement réalise les opérations consistant à :
générer, en utilisant une première antenne d'émission, un premier champ sans fil lorsqu'au moins un récepteur se trouve dans une région de transfert d'énergie de la première antenne d'émission ;
générer, en utilisant une deuxième antenne d'émission séparée spatialement de la première antenne d'émission, un deuxième champ sans fil lorsque le au moins un récepteur se trouve dans une région de transfert d'énergie de la deuxième antenne d'émission ;
activer au moins une parmi la première ou deuxième antenne d'émission selon que le au moins un récepteur se situe dans une région de transfert d'énergie de l'un parmi le premier champ sans fil et le deuxième champ sans fil, ou les deux ; et
commander, lorsque la première antenne d'émission et la deuxième antenne d'émission sont toutes deux activées, un mode de fonctionnement de l'émetteur, dans lequel la commande comprend en outre la mesure d'au moins un d'un premier niveau de couplage entre la première antenne d'émission et la au moins une antenne de réception, un deuxième niveau de couplage entre la première antenne d'émission et la deuxième antenne d'émission, ou un niveau de fuite du transfert d'énergie entre la première antenne d'émission et la au moins une antenne de réception et la sélection du mode de fonctionnement en fonction de la mesure, dans lequel ledit mode de fonctionnement est sélectionné parmi la première antenne d'émission et la deuxième antenne d'émission transférant indépendamment et simultanément de l'énergie sans fil à un même récepteur via les premier et deuxième champs sans fil ; la première antenne d'émission et la deuxième antenne d'émission transférant conjointement de l'énergie sans fil au même récepteur via les premier et deuxième champs sans fil ; ou la première antenne d'émission et la deuxième antenne d'émission transférant de l'énergie sans fil à différents récepteurs via les premier et deuxième champs sans fil.
